# EUROPEAN PATENT SPECIFICATION

(11) **EP 1 727 837 B1**
(45) Date of publication and mention of the grant of the patent: **12.12.2007**
(21) Application number: 05717018.5
(22) Date of filing: 14.03.2005
(51) Int. Cl.: C08F 10/02, C08F 2/00, C08F 4/00

(54) **METHOD OF PREPARING ETHYLENE POLYMERS BY CONTROLLED HIGH PRESSURE POLYMERIZATION**
VERFAHREN ZUR HERSTELLUNG VON ETHYLENPOLYMEREN DURCH KONTROLLIERTE HOCHDRUCKPOLYMERISATION
PROCEDE DE PREPARATION DE POLYMERES D'ETHYLENE PAR POLYMERISATION A HAUTE PRESSION CONTROLEE

(30) Priority: 24.03.2004 EP 04101214
(43) Date of publication of application: 06.12.2006
(73) Proprietor: Ciba Specialty Chemicals Holding Inc., 4057 Basel (CH)
(72) Inventor: ROTH, Michael, 64686 Lautertal (DE); PFAENDNER, Rudolf, 64668 Rimbach (DE); LUFT, Gerhard, 64367 Mühltal (DE); FREIDEL, Frank, 64711Erbach (DE)
(86) International application number: PCT/EP2005/051130
(87) International publication number: WO 2005/090419

(56) References cited:
- EP-A- 0 717 054
- US-A1- 2003 216 494

## Description

The present invention relates to a method for the radical polymerization or copolymerization of ethylene at high pressures using a hydroxylamine ester as radical initiator. A further aspect is the use of specific hydroxylamine esters as radical initiators for the (co)polymerization of ethylene.

The manufacture of ethylene polymers (PE) having varying structures and characteristics is well known in the art. There are different polymerization techniques, e.g. high pressure radically initiated polymerization, leading to low density polyethylene (LDPE), coordination polymerization with Ziegler-Natta-, chromium-, aluminium- catalysts, leading to high density polyethylene (HDPE) or polymerization with metallocene catalysts, which affect the molecular structure, such as degree of branching, molecular weight and molecular weight distribution as measured by the polydisperity as well as the physical properties, such as density, crystallinity, melting point and the processing behaviour.

The density of low density polyethylene (LDPE) may vary from 0.910 - 0.955 g/cm³, whereas commercial products usually have densities of 0.916 - 0.935. The degree of crystallinity of such products varies between 45 - 55% with melting points between 105 - 115° C. LDPE has a random branching structure and contains besides alkyl substituents (short chain branches coming from "back biting" reactions during polymerization) also long chain branches formed by molecular rearrangements of the PE backbone during chain growth.

The processes for the polymerization of ethylene at high temperatures and high pressures by means of initiating free radicals have been known for a long time. Ethylene polymers are obtained by homopolymerizing ethylene or by copolymerizing it with at least one comonomer in a polymerization system, which operates continuously under pressures of 500 - 3500 bar (50 - 350 Mpa) and at temperatures of 120 - 400° C. The polymerization is carried out in continuous tubular reactors or stirred autoclaves in the presence of initiators and optionally of transfer agents (e.g. n-alkanes, ketones, aldehydes, thiols), which adjust the molecular weights of the resulting polymers, however, on the expense of broadening the molecular weight distribution. Most commonly peroxides or hydroperoxides are used as intiators. The polymers are subsequently separated from the volatile substances after their removal from the reactor in separators. A general description of manufacturing processes, properties and use of ethylene polymers is for example given in Ullmann's Encyclopedia of Industrial Chemistry, Vol. A21, Editors: B. Elvers, S. Hawkins, G. Schulz, 5th completely rev. ed. 1992, VCH Verlags GmbH, Weinheim, pp. 487-517.

Molecular structure and physical properties of polyethylenes are not only influenced by manufacturing conditions but also by the type of initiator used. The rate of decomposition, i.e. its half-life time (as a rule ~0.1 - 1 sec under a given temperature profile), has direct influence on the polymerization rate and, therefore, on the heat of polymerization. The initiator consumption can be considered as a measure for initiator efficiency which influences not only the molecular weight of the resulting polymer but also affects the concentration of end groups (initiator fragments) and decomposition products. Common values for peroxides are 10 -1000 g/t polymer.

Handling and safety issues are as well important aspects of polymerization processes, where large amounts of peroxides are used. Not only storage and metering of peroxide containing solutions have to be kept under observation but also process technology and process control have to be adapted to the safety requirements.

Surprisingly, it has now been found that hydroxylamine esters according to the invention are suitable initiators for the high pressure ethylene polymerization leading to high molecular weight polyethylenes with narrow molecular weight distributions (Poyldispersity Index PD = 2 - 4.5). Additionally the PD of polyethylene produced according to the instant invention becomes even narrower, when the polymerization temperature is lowered (T<180° C).

Prior art peroxides show an inverse behavior. The resulting polyethylenes generally have much broader PDs (PD = 7 - 12) and narrower distributions can only be achieved with increasing temperatures (T>250° C). This is for example described by G. Luft, H. Seidl in Angew. Macromol. Chem. 1985, 129, pp 61-70.

One possibility to achieve polyethylenes with narrow PD, in high pressure polymerization, is by the combined use of free radical generators and nitroxyl radicals as, for example, disclosed in EP 0 811 590 and US 5 449 724. However, this process needs careful adjustment of the ratio of radical generator and nitroxyl radical according to different process conditions. Furthermore the nitroxyl radical is slowing down the polymerization rate, making high process temperatures necessary. However, high manufacturing temperatures are not desirable due to energy economics and side reactions of the polymerization process.

US 6 479 608 discloses heterocyclic alkoxyamines, which are useful initiator/regulator compounds for the controlled polymerization of a variety of ethylenically unsaturated monomers. These compounds split into a regulating NO radical and an inititiating carbon centered radical.

The instant invention provides a different solution for the preparation of polyethylenes with even narrower polydispersities by using solely the hydroxylamine esters of the instant invention as radical initiators. These compounds allow an excellent control of the polyethylene polymerization process without the need to adjust the ratio of different molecules. Furthermore the process can be carried out advantageously at comparatively low temperatures. Moreover, as the method of the present invention can be performed at low temperatures, copolymers of ethylene with e.g. styrene, vinylacetate and narrow molecular weight distribution are accessible. These copolymers are not accessible at high temperatures due to the ceiling temperature of these monomers, which results otherwise in a polymerization/depolymerization equilibrium with only low molecular weight products unsuitable for industrial applications.

Hydroxylamine esters do not form any nitroxyl radicals during decomposition but selectively cleave into aminyl and carbon centered radicals, which surprisingly are able to initiate ethylene polymerization under high pressure. The result is a polyethylene with low polydispersity.

One aspect of the invention is a method for the polymerization or copolymerization of ethylene at an operating pressure of from 500 to 3500 bar, at a polymerization temperature between 100° and 400° C in a suitable high pressure reactor, operating continuously or batch wise
by the use of a radical polymerization initiator,
characterized in that the radical polymerization initiator is a hydroxylamine ester containing a structural element of formula (I) or (I') 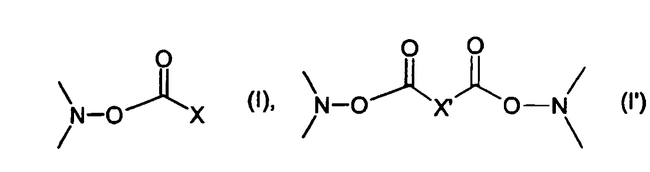 wherein
X is hydrogen, C₁-C₃₆alkyl, C₁-C₃₆atkyl which is substituted by halogen, C₅-C₁₂cycloalkyl, C₇-C₁₂bicyclo- or tricycloalkyl, C₂-C₃₆alkenyl, C₂-C₁₈alkynyl, C₆-C₁₀aryl, -O-C₁-C₁₈alkyl, -O-C₆-C₁₀aryl, -NH-C₁-C₁₈alkyl, -NH-C₆-C₁₀aryl, -N(C₁-C₆alkyl)₂;
X' is a direct bond or C₁-C₃₆alkylene, C₂-C₃₆alkenylene, C₂-C₃₆alkynylene, -(C₁-C₆alkylene)-phenyl-(C₁-C₆alkylene) or a group 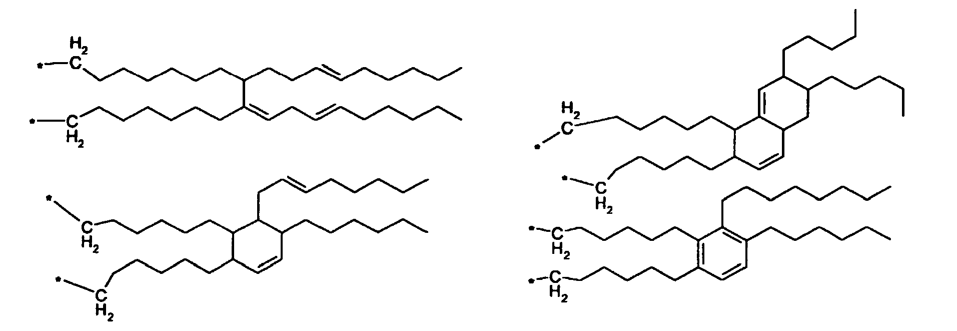 and
* indicates the bond to which the carbonyl groups are attached.

Preferably the operating pressure is of from 1000 to 3000 bar.

Preferably the polymerization temperature is of from 140° to 300° C.

In a preferred method the polydispersity, PD, of the resulting polyethylene is between 1.2 and 4.5, in particular between 1.2 and 3.5.

The hydroxylamine ester is, for example, used in an amount of from 5 to 500 parts per million, preferably of from 5 to 300 parts per million and more preferably of from 10 to 200 parts per million based on the weight of the total reaction mixture.

Suitable reactors for high pressure ethylene polymerization using peroxides are well known and for example described by H. Seidl, G. Luft, J. Macromol. Sci.-Chem. 1981, A15(1), pp. 1-33. The process is typically a continuous process using, for example, a continuous tubular reactor or a stirred autoclave reactor. A detailed flow sheet is for example given in US 6 562 915

The hydroxylamine ester is preferably a compound of formula (Ia) or (I'a) 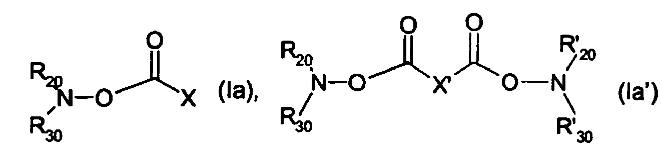 wherein
X is hydrogen, C₁-C₃₆alkyl, C₁-C₃₆alkyl which is substituted by halogen, C₅-C₁₂cycloalkyl, C₇-C₁₂bicyclo- or tricycloalkyl, C₂-C₃₆alkenyl, C₂-C₁₈alkynyl, C₆-C₁₀aryl, -O-C₁-C₁₈alkyl, -O-C₆-C₁₀aryl, -NH-C₁-C₁₈alkyl, -NH-C₆-C₁₀aryl, -N(C₁-C₆alkyl)₂;
X' is a direct bond or C₁-C₃₆alkylene, C₂-C₃₆alkenylene, C₂-C₃₆alkynylene, phenylene, -(C₁-C₆alkylone)-phenyl-(C₁-C₆alkylene) or a group 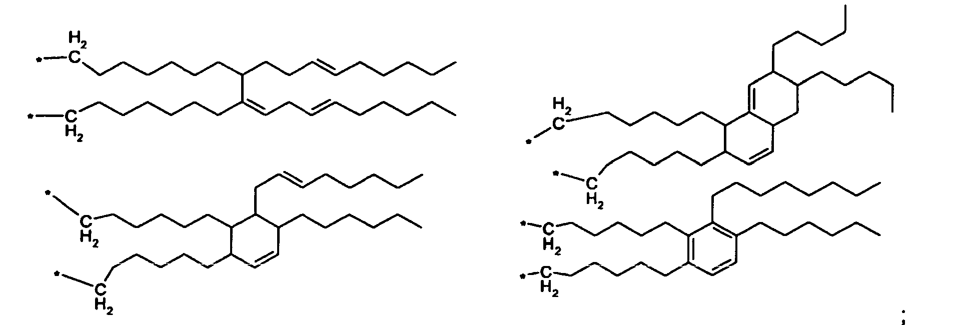 R₂₀, R'₂₀, R₃₀ and R'₃₀ are each independently of the others unsubstituted, halo-, CN-, NO₂- or -COOR₄₀-substituted or O- or NR₄₀-interrupted C₁-C₁₈alkyl, C₂C₁₈alkenyl, C₂-C₁₈alkynyl;
R₄₀ is hydrogen, phenyl or C₁-C₁₈alkyl; or
R₂₀ and R₃₀ and/or R'₂₀ and R'₃₀, together with the nitrogen atom to which they are bonded, form a 5- or 6-membered ring which may be interrupted by a nitrogen or oxygen atom and which may be substituted one or more times by C₁-C₆alkyl groups and carboxyl groups.

Any substituents that are C₁-C₁₂alkyl are, for example, methyl, ethyl, n-propyl, n-butyl, sec-butyl, tert-butyl, n-hexyl, n-octyl, 2-ethyl-hexyl, n-nonyl, n-decyl, n-undecyl or n-dodecyl.

C₁-C₁₈Alkyl may be, for example, the groups mentioned above and also, in addition, for example, n-tridecyl, n-tetradecyl, n-hexadecyl and n-octadecyl.

C₂C₃₆alkenyl may be, for example, 1-propenyl, allyl, methallyl, 2-butenyl, 2-pentenyl, 2-hexenyl, 2-octenyl or 4-tert-butyl-2-butenyl.
C₂-C₃₆alkinyl may be, for example, propinyl, butinyl, hexinyl or dodecinyl
C₅-C₁₂Cycloalkyl is, for example, cyclopentyl, cyclohexyl or cycloheptyl.

Any substituents that are C₂-C₁₂alkylene are, for example, ethylene, propylene, 2,2-dimethylpropylene, tetramethylene, hexamethylene, octamethylene, decamethylene or dodecamethylene.

Any substituents that are aryl are for example phenyl or naphthyl.

Any substituents that are C₆-C₁₅aryiene are, for example, o-, m- or p-phenylene, 1,4-naphthylene or 4,4'-diphenylene.

Halogen is F, Cl, Br and I. Alkyl substituted by halogen is for example trifluormethyl.

The hydroxyiamine esters are known and for example described in WO 02/092853.

Preparation of hydroxylamine esters that may advantageously be used in the above-mentioned method are described, for example, in U.S. Patent Specifications No. 4 590 231, 5 300 647, 4 831 134, 5 204 473, 5 004 770, 5 096 950, 5 021 478, 5 118 736, 5 021 480, 5 015 683, 5 021 481, 5 019 613, 5 021 486, 5 021 483, 5 145 893, 5 286 865, 5 359 069, 4 983 737, 5 047 489, 5 077 340, 5 021 577, 5 189 086, 5 015 682, 5 015 678, 5 051 511, 5 140 081, 5 204 422, 5 026 750, 5 185 448, 5 180 829, 5 262 538, 5 371 125, 5 216 156 and 5 300 544.

Further hydroxylamine esters and the preparation thereof are described in WO 01/90113.

Preferred hydroxylamine esters are of formula (Ia) wherein R₂₀ and R₃₀, together with the nitrogen atom to which they are bonded, form a piperidine ring which is substituted in the 2,2-and 6,6-positions by C₁-C₄alkyl groups and in the 4-position has an ether, amine, amide, urethane, ester or ketal group. Special preference is given to cyclic ketals.

For example the hydroxylamine esters are of formula (A), (B), (C) or (O) 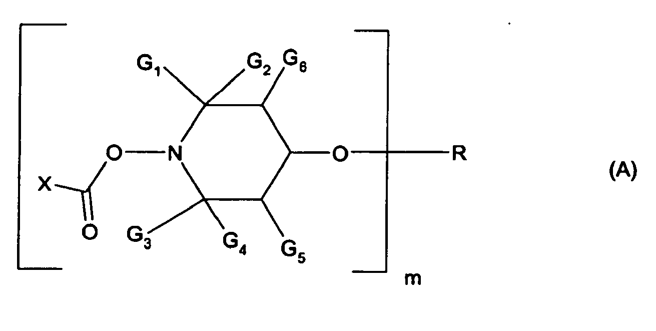 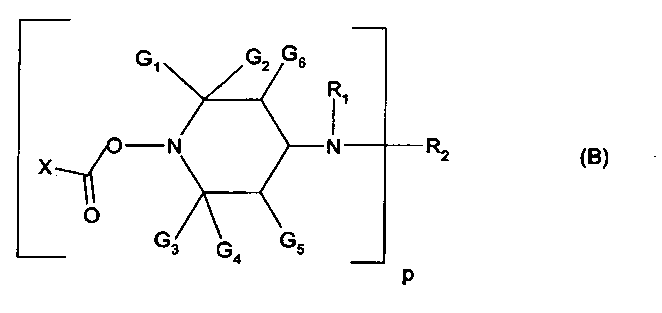 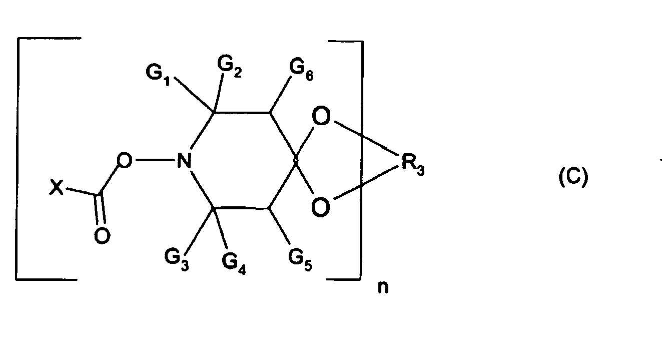 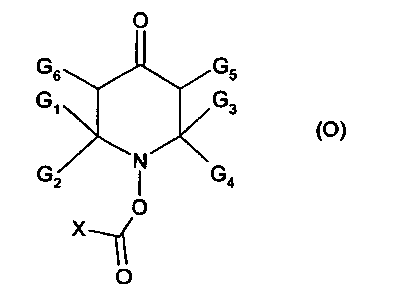 wherein
G₁, G₂, G₃ and G₄ are each independently of the others alkyl having from 1 to 4 carbon atoms;
G₅ and G₆ are each independently of the other hydrogen or C₁-C₄alkyl;
m is a number 1-2;
R, when m is 1, is hydrogen, uninterrupted C₁-C₁₈alkyl or C₂-C₁₈alkyl interrupted by one or more oxygen atoms, or is cyanoethyl, benzoyl, glycidyl, a monovalent radical of an aliphatic carboxylic acid having from 2 to 18 carbon atoms, of a cycloaliphatic carboxylic acid having from 7 to 15 carbon atoms or of an α,β-unsaturated carboxylic acid having from 3 to 5 carbon atoms or of an aromatic carboxylic acid containing from 7 to 15 carbon atoms, it being possible for each carboxylic acid to be substituted in the aliphatic, cycloaliphatic or aromatic unit by from 1 to 3 groups -COOZ₁₂ wherein Z₁₂ is hydrogen, C₁-C₂₀alkyl, C₃-C₁₂alkenyl, C₅-C₇cycloalkyl, phenyl or benzyl; or R is a monovalent radical of a carbamic acid or phosphorus-containing acid or is a monovalent silyl radical;
R, when m is 2, is C₂-C₁₂alkylene, C₄-C₁₂alkenylene, xylylene, a bivalent radical of an aliphatic dicarboxylic acid having from 2 to 36 carbon atoms or of a cycloaliphatic or aromatic dicarboxylic acid having from 8 to 14 carbon atoms or of an aliphatic, cycloaliphatic or aromatic dicarbamic acid having from 8 to 14 carbon atoms, it being possible for each dicarboxylic acid to be substituted in the aliphatic, cycloaliphatic or aromatic unit by one or two groups -COOZ₁₂; or
R is a bivalent radical of a phosphorus-containing acid or a bivalent silyl radical;
p is 1,
R₁ is C₁-C₁₂alkyl, C₅-C₇cycloalkyl, C₇-C₈aralkyl, C₂-C₁₈alkanoyl, C₃-C₅alkenoyl or benzoyl;
R₂ is C₁-C₁₈alkyl, C₅-C₇cycloalkyl, C₂-C₈alkenyl, each unsubstituted or substituted by a cyano, carbonyl or carbamide group, or is glycidyl, a group of formula -CH₂CH(OH)-Z or of formula -CO-Z or -CONH-Z, wherein Z is hydrogen, methyl or phenyl;
n is a number 1 or 2;
when n is 1,
R₃ is C₂₋C₈alkylene or hydroxyalkylene or C₄-C₃₆acyloxyalkylene: or,
when n is 2,
R₃ is (-CH₂)₂C(CH₂-)₂ and
X is as defined above.

A likewise preferred group consists of hydroxylamines wherein G₁ and G₂ are ethyl and G₃ and G₄ are methyl, or G₁ and G₃ are ethyl and G₂ and G₄ are methyl; and
G₅ and G₆ are each independently of the other hydrogen or methyl.

C₄-C₃₆Acyloxyalkylene is, for example, 2-ethyl-2-acetoxymethylpropylene. R₃ is especially a group of the formula

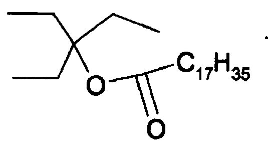

The other substituents have the definitions, including the preferred meanings, given above.

Preferably the substituent X is selected from the group consisting of C₁-C₃₆alkyl, C₂-C₁₉alkenyl and C₆-C₁₀aryl.

Special preference is given to a hydroxylamine ester of formula (C') 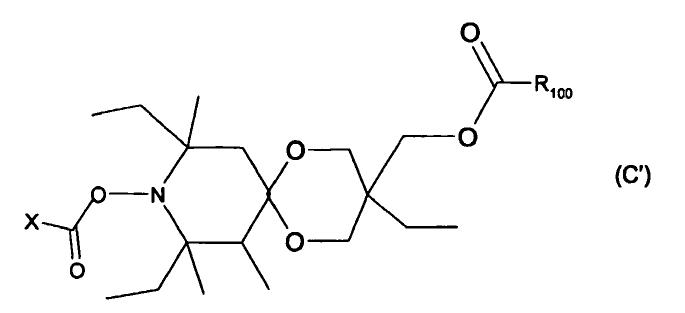 wherein X is hydrogen or C₁-C₁₈alkyl and R₁₀₀ is C₄-C₂₄alkyl

Further suitable hydroxylamine esters are oligomers or polymers obtained by reacting a dicarboxylic acid with a compound of formula A1 or B1 or by reacting a diisocyanate with a compound of formula A1 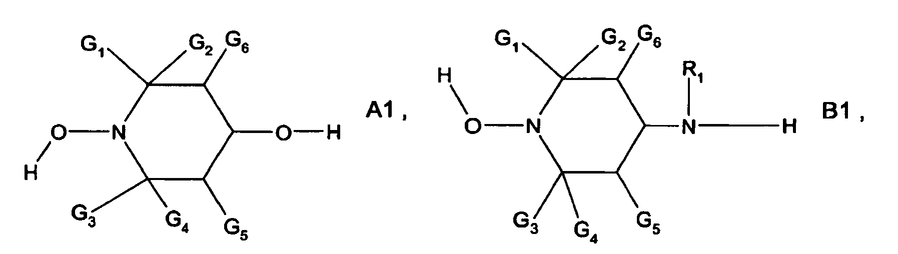 wherein G₁, G₂, G₃ and G₄ are each independently of the others C₁-C₄alkyl, or G₁ and G₂ together and G₃ and G₄ together, or G₁ and G₂ together or G₃ and G₄ together are pentamethylene;
G₅ and G₆ are each independently of the other hydrogen or C₁-C₄alkyl; and
R₁ is C₁-C₁₂alkyl, C₅-C₇cycloalkyl, C₇-C₈aralkyl, C₂-C₁₈alkanoyl, C₃-C₅alkenoyl or benzoyl.

The compounds of formula A1 may be reacted to form polyesters. The polyesters may be homo- or co-polyesters that are derived from aliphatic, cycloaliphatic or aromatic dicarboxylic acids and diols and a compound of formula A1.

The aliphatic dicarboxylic acids may contain from 2 to 40 carbon atoms, the cycloaliphatic dicarboxylic acids from 6 to 10 carbon atoms, the aromatic dicarboxylic acids from 8 to 14 carbon atoms, the aliphatic hydroxycarboxylic acids from 2 to 12 carbon atoms and the aromatic and cycloaliphatic hydroxycarboxylic acids from 7 to 14 carbon atoms.

It is also possible for the polyesters, in small amounts, for example from 0.1 to 3 mol %, based on the dicarboxylic acids present, to be branched by means of more than difunctional monomers (for example, pentaerythritol, trimellitic acid, 1,3,5-tri(hydroxyphenyl)benzene, 2,4-dihydroxybenzoic acid or 2-(4-hydroxyphenyl)-2-(2,4-dihydroxyphenyl)propane).

Suitable dicarboxylic acids are linear and branched saturated aliphatic dicarboxylic acids, aromatic dicarboxylic acids and cycloaliphatic dicarboxylic acids.
Suitable aliphatic dicarboxylic acids are those having from 2 to 40 carbon atoms, for example oxalic acid, malonic acid, dimethylmalonic acid, succinic acid, pimelic acid, adipic acid, trimethyladipic acid, sebacic acid, azelaic acid and dimeric acids (dimerisation products of unsaturated aliphatic carboxylic acids such as oleic acid), alkylated malonic and succinic acids such as octadecylsuccinic acid.

Suitable cycloaliphatic dicarboxylic acids are: 1,3-cydobutanedicarboxylic acid, 1,3-cyclopentanedicarboxylic acid, 1,3- and 1,4-cyclohexanedicarboxylic acid, 1,3- and 1,4-(dicarboxylmethyl)cyclohexane and 4,4'-dicyclohexyldicarboxylic acid.

Suitable aromatic dicarboxylic acids are: especially terephthalic acid, isophthalic acid, o-phthalic acid, and 1,3-, 1,4-, 2,6- or 2,7-naphthalenedicarboxylic acid, 4,4'-diphenyldicarboxylic acid, 4,4'-diphenylsulfonedicarboxylic acid, 4,4'-benzophenonedicarboxylic acid, 1,1,3-trimethyl-5-carboxyl-3-(p-carboxylphenyl)-indan, 4,4'-diphenyl ether dicarboxylic acid, bis-p-(carboxylphenyl)-methane or bis-p-(carboxylphenyl)-ethane.

Preference is given to the aromatic dicarboxylic acids and, amongst those, especially terephthalic acid, isophthalic acid and 2,6-naphthalenedicarboxylic acid.

Further suitable dicarboxylic acids are those that contain -CO-NH- groups; they are described in DE-A 2 414 349. Dicarboxylic acids that contain N-heterocyclic rings are also suitable, for example those that are derived from carboxylalkylated, carboxylphenylated or carboxybenzylated monoamine-s-triazinedicarboxylic acids (cf. DE-A 2 121 184 and 2 533 675), mono- or bis-hydantoins, optionally halogenated benzimidazoles or parabanic acid. The carboxyalkyl groups therein may contain from 3 to 20 carbon atoms.

When additional diols are used, suitable aliphatic diols are the linear and branched aliphatic glycols, especially those having from 2 to 12, more especially from 2 to 6, carbon atoms in the molecule, for example: ethylene glycol, 1,2- and 1,3-propylene glycol, 1,2-, 1,3-, 2,3- or 1,4-butanediol, pentyl glycol, neopentyl glycol, 1,6-hexanediol and 1,12-dodecanediol. A suitable cycloaliphatic diol is, for example, 1,4-dihydroxycyclohexane. Further suitable aliphatic diols are, for example, 1,4-bis(hydroxymethyl)cyclohexane, aromatic-aliphatic diols such as p-xylylene glycol or 2,5-dichloro-p-xylylene glycol, 2,2-(β-hydroxyethoxyphenyl)-propane and also polyoxyalkylene glycols such as diethylene glycol, triethylene glycol, polyethylene glycol and polypropylene glycol. The alkylene diols are preferably linear and contain especially from 2 to 4 carbon atoms.

Polyoxyalkylene glycols having molecular weights of from 150 to 40 000 are also suitable.

As aromatic diols mention is made of those wherein two hydroxy groups are bonded to one or to different aromatic hydrocarbon radical(s).

Preferred diols are the alkylene diols, and 1,4-dihydroxycydohexane and 1,4-bis(hydroxymethyl)cyclohexane. Special preference is given to ethylene glycol, 1,4-butanediol, and also 1,2- and 1,3-propylene glycol.

Further suitable aliphatic diols are the β-hydroxyalkylated, especially β-hydroxyethylated, bisphenols such as 2,2-bis[4'-(β-hydroxyethoxy)phenyl]propane. Further bisphenols are mentioned hereinafter.

A further group of suitable aliphatic diols comprises the heterocyclic diols described in German Offenlegungsschriften 1 812 003, 2 342 432, 2 342 372 and 2 453 326. Examples are: N,N'-bis(β-hydroxyethyl)-5,5-dimethyl-hydantoin, N,N'-bis(β-hydroxypropyl)-5,5-dimethylhydantoin, methylenebis[N-(β-hydroxyethyl)-5-methyl-5-ethylhydantoin], methylenebis[N-(β-hydroxyethyl)-5,5-dimethylhydantoin], N,N'-bis(β-hydroxyethyl)benzimidazolone, N,N'-bis(β-hydroxyethyl)-(tetrachloro)-benzimidazolone and N,N'-bis(β-hydroxyethyl)-(tetrabromo)-benzimidazolone.

Suitable aromatic diols include mononuclear diphenols and, especially, binuclear diphenols carrying a hydroxyl group on each aromatic nucleus. "Aromatic" is understood to refer preferably to hydrocarbon-aromatic radicals, for example phenylene or naphthylene. Besides, for example, hydroquinone, resorcinol and 1,5-, 2,6- and 2,7-dihydroxynaphthalene, special mention should be made of bisphenols that can be represented by the following formulae: 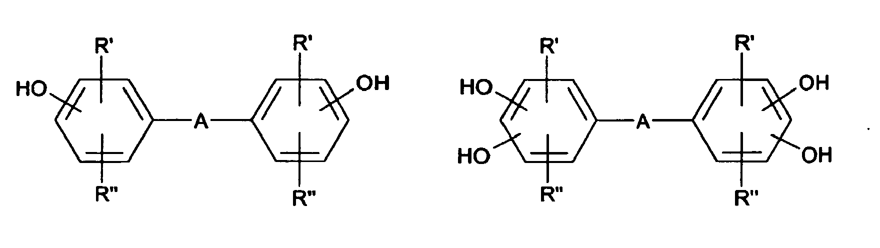 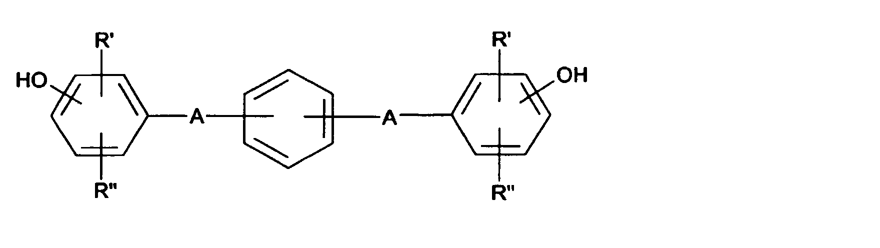 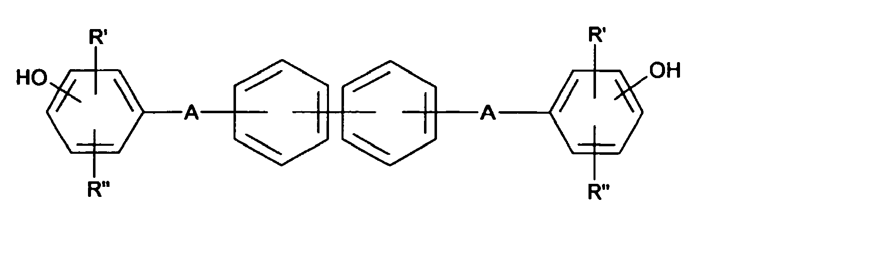 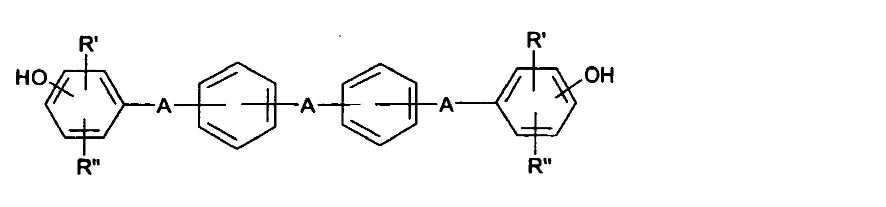 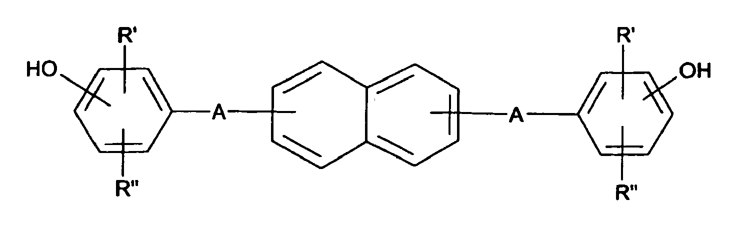 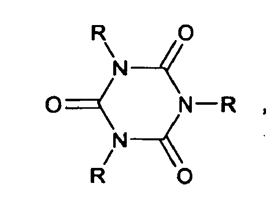 R = CH₂-CH₂-OH.

The hydroxyl groups may be in the m-position, but especially in the p-position; R' and R" in those formulae may be alkyl having from 1 to 6 carbon atoms, halogen such as chlorine or bromine, and especially hydrogen atoms. A can denote a direct bond or -O-, -S-, -(O)S(O)-, -C(O)-, -P(O)(C₁-C₂₀alkyl)-, unsubstituted or substituted alkylidene, cycloalkylidene or alkylene.

Examples of unsubstituted or substituted alkylidene are: ethylidene, 1,1- or 2,2-propylidene, 2,2-butylidene, 1,1-isobutylidene, pentylidene, hexylidene, heptylidene, octylidene, dichloroethylidene and trichloroethylidene.

Examples of unsubstituted or substituted alkylene are methylene, ethylene, phenylmethylene, diphenylmethylene and methylphenylmethylene. Examples of cycloalkylidene are cyclopentylidene, cyclohexylidene, cycloheptylidene and cyclooctylidene.

Examples of bisphenols are: bis(p-hydroxyphenyl) ether or thioether, bis(p-hydroxyphenyl)-sulfone, bis(p-hydroxyphenyl)methane, bis(4-hydroxyphenyl)-2,2'-biphenyl, phenylhydroquinone, 1,2-bis(p-hydroxyphenyl)ethane, 1-phenyl-bis(p-hydroxyphenyl)methane, diphenyl-bis(p-hydroxyphenyl)methane, diphenyl-bis(p-hydroxyphenyl)ethane, bis(3,5-dimethyl-4-hydroxyphenyl)sulfone, bis(3,5-dimethyl-4-hydroxyphenyl)-p-diisopropylbenzene, bis(3,5-dimethyl-4-hydroxyphenyl)-m-diisopropylbenzene, 2,2-bis(3',5'-dimethyl-4'-hydroxyphenyl)-propane, 1,1- or 2,2-bis(p-hydroxyphenyl)butane, 2,2-bis(p-hydroxyphenyl)hexafluoropropane, 1,1-dichloro- or 1,1,1-trichloro-2,2-bis(p-hydroxyphenyl)ethane, 1,1-bis(p-hydroxyphenyl)cyclopentane and especially 2,2-bis(p-hydroxyphenyl)propane (bisphenol A) and 1,1-bis(p-hydroxyphenyl)cyclohexane (bisphenol C).

Suitable polyesters of hydroxycarboxylic acids are, for example, polycaprolactone, polypivalolactone and the polyesters of 4-hydroxycyclohexanecarboxylic acid, 2-hydroxy-6-naphthalenecarboxylic acid or 4-hydroxybenzoic acid.

Furthermore, polymers that may contain mainly ester bonds, but also other bonds, for example polyester amides and polyester imides, are also suitable.

Oligomers/polymers are obtained which contain, as structural repeating unit, a group of formula A2 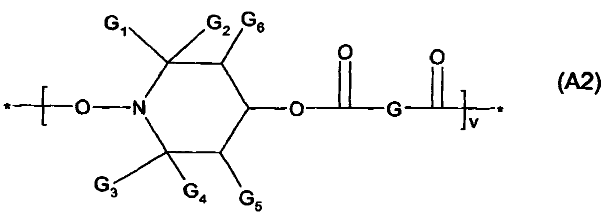 wherein the substituents G₁-G₆ are as defined hereinbefore, v is a number 2-200 and the meaning of G results from the dicarboxylic acid used. Suitable dicarboxylic acids are mentioned hereinbefore.

When a compound of formula B1 is reacted with the described dicarboxylic acids and, optionally, further diols, polyester amides are obtained having the structural repeating unit (B2)

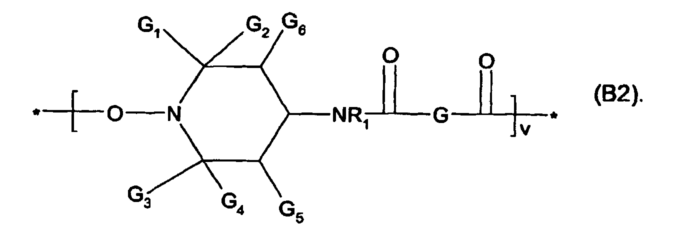

The definitions of the substituents are given hereinbefore.

A third group of very suitable oligomers/polymers comprises polyurethanes that are obtained by reacting diisocyanates with compounds of formula A1 and, optionally, further diols.

Very suitable diisocyanates are 1,6-bis[isocyanato]hexane, 5-isocyanato-3-(isocyanatomethyl)-1,1,3-trimethylcydohexane, 1,3-bis[5-isocyanato-1,3,3-trimethyl-phenyl]-2,4-dioxo-1,3-diazetidine, 3,6-bis[9-isocyanato-nonyl]-4,5-di(1-heptenyl)cyclohexene, bis[4-isocyanatocyclohexyl]methane, trans-1,4-bis[isocyanato]cyclohexane, 1,3-bis[isocyanatomethyl]-benzene, 1,3-bis[1-isocyanato-1-methyl-ethyl]benzene, 1,4-bis[2-isocyanato-ethyl]cyclohexane, 1,3-bis[isocyanatomethyl]cyclohexane, 1,4-bis[1-isocyanato-1-methylethyl]benzene, bis[isocyanato]isododecylbenzene, 1,4-bis[isocyanato]benzene, 2,4-bis[isocyanato]toluene, 2,6-bis[isocyanato]toluene, 2,4-/2,6-bis[isocyanato]toluene, 2-ethyl-1,2,3-tris[3-isocyanato-4-methyl-anilinocarbonyloxy]propane, N,N'-bis[3-isocyanato-4-methylphenyl]urea, 1,4-bis[3-isocyanato-4-methylphenyl]-2,4-dioxo-1,3-diazetidine, 1,3,5-tris[3-isocyanato-4-methylphenyl]-2,4,6-trioxohexahydro-1,3,5-triazine, 1,3-bis[3-isocyanato-4-methylphenyl]-2,4,5-trioxoimidazolidine, bis[2-isocyanatophenyl]methane, (2-isocyanato-phenyl)-(4-isocyanatophenyl)-methane, bis[4-isocyanato-phenyl]methane, 2,4-bis-[4-isocyanatobenzyl]-1-isocyanatobenzene, [4-isocyanato-3-(4-isocyanato-benzyl)-phenyl]-[2-isocyanato-5-(4-isocyanato-benzyl)-phenyl]methane, tris[4-isocyanato-phenyl]methane, 1,5-bis[isocyanato]-naphthalene and 4,4'-bis[isocyanato]-3,3'-dimethyl-biphenyl.

Especially preferred diisocyanates are 1,6-bis[isocyanato]hexane, 5-isocyanato-3-(isocyanatomethyl)-1,1,3-trimethylcydohexane, 2,4-bis[isocyanato]toluene, 2,6-bis[isocyanato]-toluene, 2,4-/2,6-bis[isocyanato]toluene or bis[4-isocyanato-phenyl]methane.

Polyurethanes having the structural repeating unit (A3) 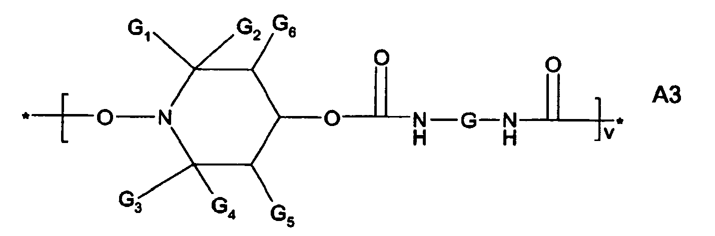 are obtained. The substituents are defined hereinbefore. The meaning of G results from the diisocyanates used.

Especially suitable individual compounds are mentioned herein below, Table 1.

**Table 1**

| **Compound no.** | **Structural formula** | **Compound no.** | **Structural formula** |
|---|---|---|---|
| **101** | 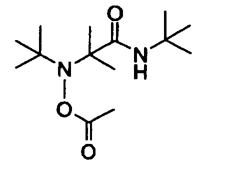 | **102** | 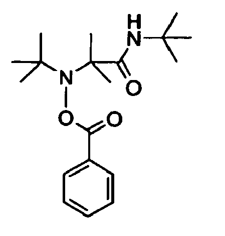 |
| **103** | 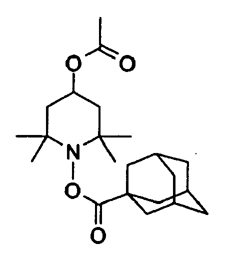 | **104** | 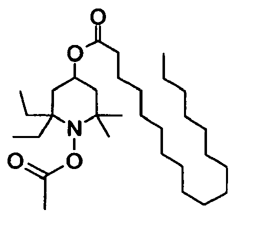 |
| **105** | 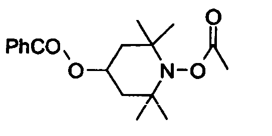 | **106** | 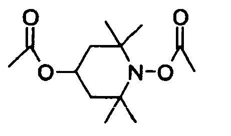 |
| **107** | 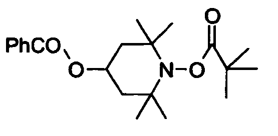 | **108** | 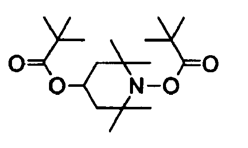 |
| **109** | 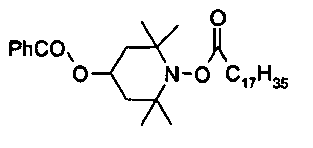 | **110** | 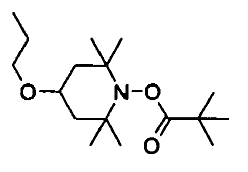 |
| **111** | 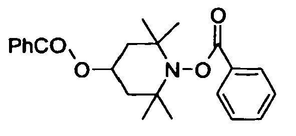 | **112** | 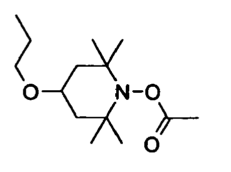 |
| **113** | 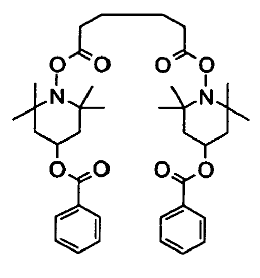 | **114** | 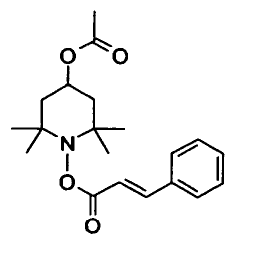 |
| **115** | 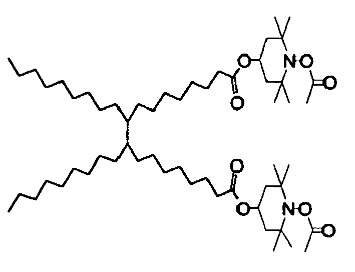 | | |
| **116** | 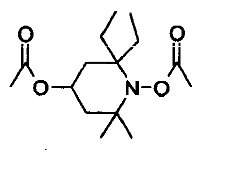 | **117** | 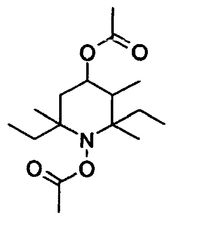 |
| **118** | 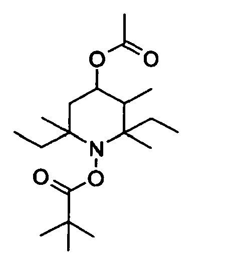 | **119** | 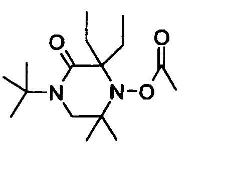 |
| **120** | 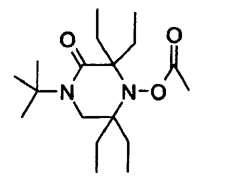 | **121** | 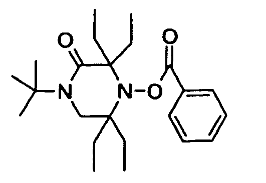 |
| **122** | 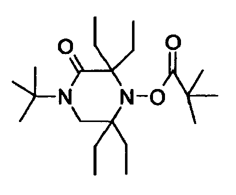 | **123** | 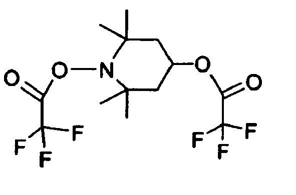 |
| **124** | 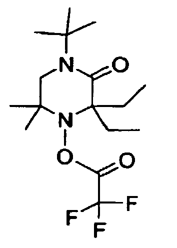 | **125** | 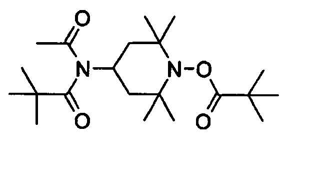 |
| **126** | 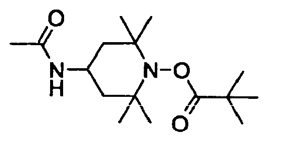 | **127** | 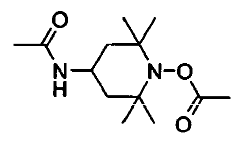 |
| **128** | 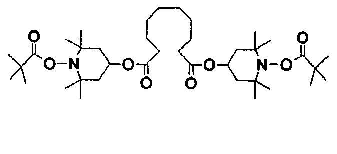 | **129** | 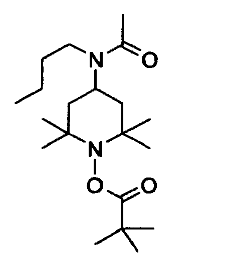 |
| **130** | 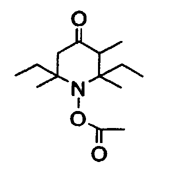 | **131** | 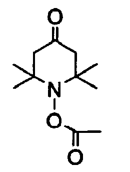 |
| **132** | 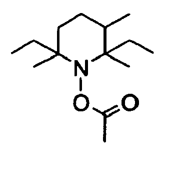 | **133** | 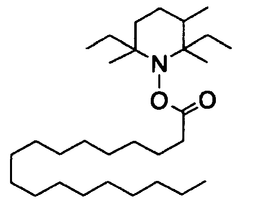 |
| **134** | 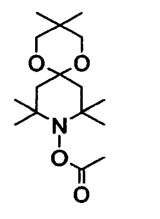 | **135** | 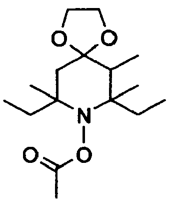 |
| **136** | 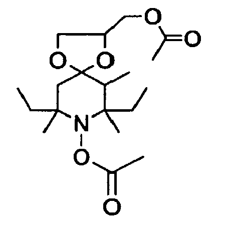 | **137** | 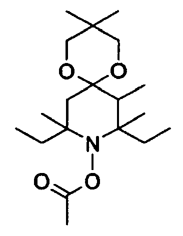 |
| **138** | 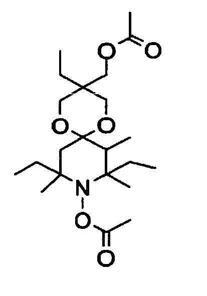 | **139** | 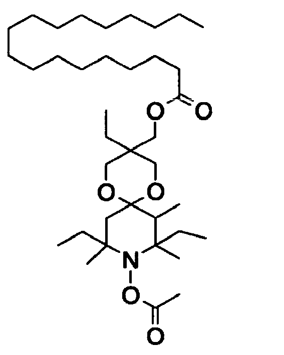 |
| **140** | 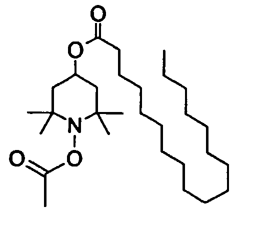 | **141** | 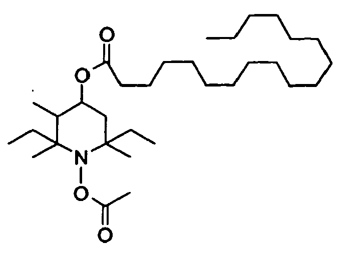 |
| **142** | 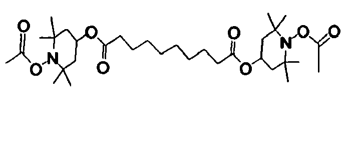 | **143** | 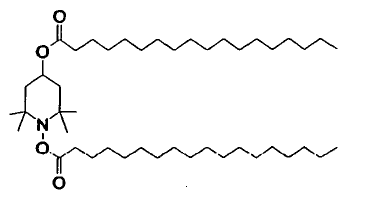 |
| **144** | 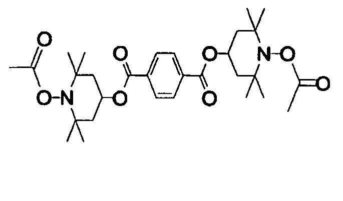 | **145** | 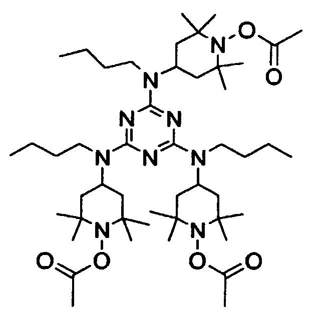 |
| **146** | 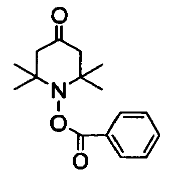 | **147** | 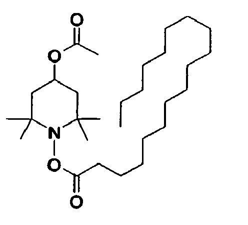 |
| **148** | Polymer from 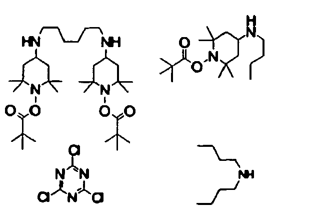 | **149** | Polymer from 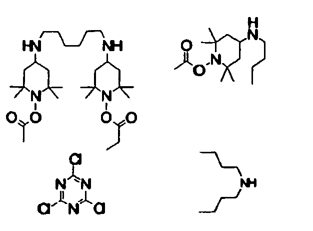 |
| **150** | Polymer from 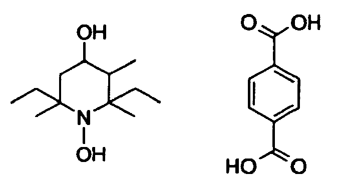 | **151** | Polymer from 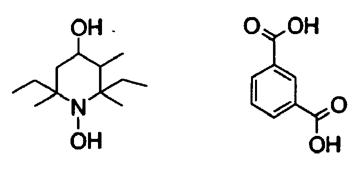 |
| **152** | Polymer from 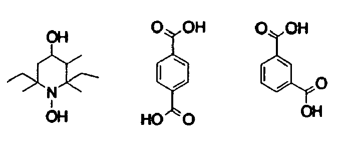 | **153** | Polymer from 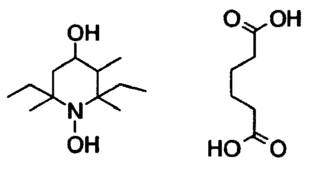 |
| **154** | Polymer from 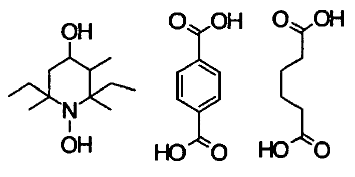 | | |

In a specific embodiment of the invention an additional organic radical initiator is added.

Examples of free-radical initiators will be known to the person skilled in the art and are commercially available, for example:

2,2'-azo-bis(2-methyl-butyronitrile) = AIBN, 2,2'-azo-bis(2,4-dimethylvaleronitrile), 2,2'-azo-bis(4-methoxy-2,4-dimethylvaleronitrile), 1,1'-azo-bis(1-cyclohexanecarbonitrile), 2.2'-azo-bis(isobutyramide) dihydrate, 2-phenylazo-2,4-dimethyl-4-methoxyvaleronitrile, dimethyl-2,2'-azo-bisisobutyrate, 2-(carbamoylazo)isobutyronitrile, 2,2'-azo-bis(2,4,4-tri-methylpentane), 2,2'-azo-bis(2-methy)propane), 2,2'-azo-bis(N,N'-dimethytene-isobutyro-amidine) in the free base or hydrochloride form, 2,2'-azo-bis(2-amidinopropane) in the free base or hydrochloride form, 2,2'-azo-bis{2-methyl-N-[1,1-bis(hydroxymethyl)ethyl]propionamide} or 2,2'-azo-bis{2-methyl-N-[1,1-bis(hydroxymethyl)-2-hydroxylthyl]propionamide}.

Acetylcyclohexane-sulfonyl peroxide, diisopropyl-peroxy-dicarbonate, tert-amyl pemeodecanoate, tert-butyl pemeodecanoate, tert-butyl perpivalate, tert-amyl perpivalate, di(2,4-dichlorobenzoyl) peroxide, diisononanoyl peroxide, didecanoyl peroxide, dioctanoyl peroxide, dilauroyl peroxide, di(4-methyl-benzoyl) peroxide, disuccinic acid peroxide, diacetyl peroxide, dibenzoyl peroxide = BPO, tert-butyl per-2-ethyl hexanoate, di(4-chloro-benzoyl) peroxide, tert-butyl perisobutyrate, tert-butyl permaleinate, 1,1-bis(tert-butylperoxy)-3,5,5-trimethylcydohexane, 1,1-bis(tert-butylperoxy)cydohexane, tert-butyl-peroxy-isopropyl carbonate, tert-butyl perisononaoate, 2,5-dimethylhexane-2,5-dibenzoate, tert-butyl peracetate, tert-amyl perbenzoate, tert-butyl perbenzoate, diisopropyl peroxydicarbonate, bis(4-tert-butylcydohexyl) peroxydicarbonate, 2,2-bis(tert-butylperoxy)butane, 2,2-bis(tert-butyl-peroxy)propane, dicumyl peroxide = DCP, 2,5-dimethylhexane-2,5-di-tert-butyl peroxide, 3-tert-butylperoxy-3-phenyl phthalide, di-tert-amyl peroxide, 1,3-bis(tert-butylperoxy-isopropyl)benzene, 3,5-bis(tert-butylperoxy)-3,5-dimethyl-,2-dioxolane, di-tert-butyl peroxide, 2,5-dimethyl-hexyne-2,5-di-tert-butyl peroxide, n-butyl 4,4-di(tert-butylperoxy)valerate, ethyl 3,3-di(tert-butylperoxy)butyrate, di(1-hydroxycyclohexyl) peroxide, dibenzyl peroxide, tert-butyl-cumyl peroxide, 3,3,6,6,9,9-hexamethyl-1,2,4,5-tetraoxacyclononane, p-menthane hydroperoxide, pinane hydroperoxide, diisopropylbenzene mono-hydroperoxide, cumene hydroperoxide, methyl ethyl ketone peroxide and tert-butyl hydroperoxide.

There may also be mentioned commercially available 'C free-radical-formers', for example: 2,3-dimethyl-2,3-diphenylbutane, 3,4-dimethyl-3,4-diphenylhexane or poly-1,4-diisopropylbenzene.

Where appropriate, combinations of such free-radical-formers may also be used.

Particularly preferred are the organic peroxides selected from the group consisting of isobutyryl-peroxide, isopropylperoxy-dicarbonate, di-n-butylperoxy-dicarbonate, di-sec-butylperoxy-dicarbonate, dicyclohexylperoxy-dicarbonate, di(2-ethylhexyl)peroxy-dicarbonate, t-butyl-perneodecanoate, t-butyl-perpivalate, bis(3,5,5-trimethyl-hexanoyl)peroxide, didecanoyl-peroxide, dilauroyl-peroxide, t-butyl-perisobutyrate, t-butyl-per2-ethylhexanoate, t-butyl-peracetate, t-butyl-per-3,5,5-trimethylhexanoate, t-butyl-perbenzoate, di-t-butyl-peroxide, t-butyl-hydroperoxide and di-t-amylperoxide.
In another embodiment of the invention additionally a chain transfer agent is added.

The chain transfer agent is, for example, selected from the group consisting of ketones, aldehydes, C₃-C₂₀alkanes, C₃-C₂₀alkenes, mercaptanes and disulfides.

Specific examples for sulfur containing compounds are mercaptoethanol, dodecylmercaptane, dibenzylsufide, dibutylsulfide, octadecyldisulfide, distearylthiodipropionate (Irganox PS 802), dipalmityldithiodipropionate, dilaurylthiodipropionate (Irganox® PS 800).

Most preferred is dodecylmercaptane.

Chain transfer agents are known and for example described in "The Chemistry of Free Radical Polymerization", Ed. G. Moad, E. Rizzardo, Pergamon 1995, pages 234-251. They are largely items of commerce.

In a further embodiment of the invention the method is carried out in the presence of a comonomer, which is selected from a monomer containing a vinyl group, an allyl group, a vinylidene group, a diene group or a olefinic group other than ethylene.

The term vinyl group containing monomer is understood to mean in particular (meth)acrylates, vinylaromatic monomers, vinylesters, vinyl ethers, (meth)acrylonitrile, (meth)acrylamide, mono and di(C₃-C₁₈alkyl)(meth)acrylamides and monoesters and diesters of maleic acid.

Mention may be made as examples of useful (meth)acrylates of glycidyl, methyl, ethyl, 2,2,2-trifluoroethyl, n-propyl, isopropyl, n-butyl, , sec-buty, tert-butyl, n-amyl, i-amyl, n-hexyl, 2-ethylhexyl, cyclohexyl, octyl, i-octyl, nonyl, decyl, lauryl, stearyl, phenyl, benzyl, β-hydroxyethyl, isobornyl, hydroxypropyl (meth)acrylates.

The term vinylaromatic monomer is understood to mean, for example, styrene, vinyltoluene, α-methylstyrene, 4-methoxystyrene, 2-(hydroxymethyl)styrene, 4-ethylstyrene, vinylanthracene.

Mention may be made as vinyl esters, of vinyl acetate, vinyl propionate, vinyl chloride and vinyl fluoride, as vinyl ethers, of vinyl methyl ether and vinyl ethyl ether.

An example of a vinylidene monomer is vinylidene fluoride.

The term diene group containing monomer is understood to mean a diene chosen from conjugated or nonconjugated , linear or cyclic dienes, such as, for example, butadiene, 2,3-dimethyl-butadiene, 1,5-hexadiene, 1,9-decadiene, 5-methylene-2-norbornene, 1,5 cyclooctadiene or 4,7,8,9-tetrahydroindene.

Typically other olefinic monomers than ethylene are, for example, propylene, 1-butene, 4-methyl-1-pentene, octene or 1-decene.

Further comonomers may be maleic acid anhydride, fumaric acid anhydride or itaconic acid anhydride and N-alkyl or N-arylmaleimide.

Particulary preferred comonomers are methylacrylate, ethylacrylate,n-butylacrylate, vinylacetate, styrene, a-methylstyrene and methylmethacrylate .

The proportion of comonomers for the preparation of random copolymers of ethylene may be in general from 0 to 90% by weight, preferably from 0 to 50% by weight and in particular from 0 to 10% by weight.

A further aspect of the invention is the use of a hydroxylamine ester containing a structural element of formula (I) or (I') as radical forming species for the continuous or batch wise polymerization or copolymerization of ethylene at an operating pressure of from 500 to 3500 bar, at a polymerization temperature between 100° and 400° C in a suitable high pressure reactor.

The following examples illustrate the invention.

### General Polymerization Procedure

The ethylene polymerization experiments are carried out in a continuously operating laboratory plant. The center piece is a small stirred tank autoclave with jacket heating and 15 mL capacity. The polymerizations can be carried out at pressures up to 3000 bar and temperatures up to 300° C. The ethylene is compressed by means of a multistage diaphragm compressor. The initiator is dissolved in dry hexane and passed into the reactor through a metering device. Polymer samples can be separated from the reactor by a heated needle valve at the bottom of the autoclave. The formed polymer is separated from the unreacted ethylene by pressure release and the amount (conversion) is determined by gravimetry. The reaction parameters, mass flows and valves are computer controlled.

All polymerization experiments are carried out at a pressure of 1800 bar, the mean residence time in the autoclave is 120 sec. The corresponding polymerization temperatures can be taken from Table 1. The initiator consumption (efficiency) per kg polymer can be calculated from the conversion and the amount of initiator used.
Molecular weights and molecular weight distributions (PD) are determined by gel permeation chromatography in trichlorobenzene (140° C) calibrated with polystyrene standards.

The hydroxylamine ester used is compound 139, prepared according to WO 01/90113

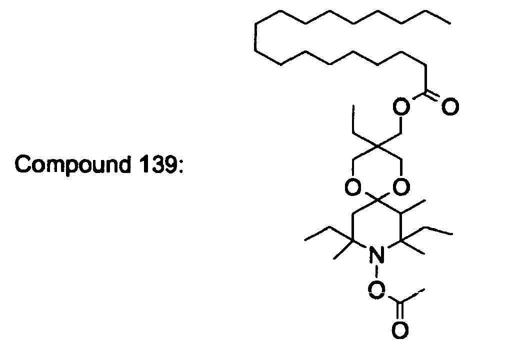

**Table 1: reaction conditions and analysis of LDPEs manufactured by high pressure polymerization of ethylene initiated by compound 139**

| Specimen | Compound 139 | Reaction Temp. | Conversion | Initiator efficiency | Mₙ | M_{w} | PD | Number of branches | MVR* 190/21.6 |
|---|---|---|---|---|---|---|---|---|---|
| | / mol ppm | / °C | / % | / g/kg_{polymer} | / g/mol | / g/mol | - | CH₃/1000C | / cm³/10 min |
| Example 1 | 15 | 205 | 13 | 1.3 | 8.45E+05 | 3.67E+05 | 4.3 | 22.5 | 0.34 |
| Example 2 | 30 | 170 | 1.5 | 22.3 | 8.11E+04 | 2.84E+05 | 3.5 | 17.9 | ** |
| Example 3 | 15 | 170 | 1.4 | 12.4 | 1.16E+05 | 3.89E+05 | 3.4 | 15.3 | ** |
| Example 4 | 30 | 160 | 2.7 | 25.1 | 2.02E+05 | 5.47E+05 | 2.7 | 15.6 | <0.1 |
| Lupoien 2420 F Commercial prod.)*** | - | - | - | - | | | | | 79.9 |
| Comparative example**** | - | 230 | 2808 | 0.6 | 2.32E+04 | 1.87E+05 | 8.1 | 14.1 | 10.9 |

| | | | | | | | | | |
|---|---|---|---|---|---|---|---|---|---|
| *according to ISO1133 **not determined ***producer: Basell Polyolefins ***initiated by 30 mol ppm t-butylperbenzoate | | | | | | | | | |

The data in Table 1 show that polymerizations carried out according to the invention lead to polyethylenes having high molecular weights (small MVR values) and narrow molecular weight distributions (PDs) whereas the polymer specimen from the comparative example as well as the commercial product show very broad PDs at even lower molecular weights.

## Claims

1. A method for the polymerization or copolymerization of ethylene at an operating pressure of from 500 to 3500 bar, at a polymerization temperature between 100° and 400° C in a suitable high pressure reactor, operating continuously or batch wise by the use of a radical polymerization initiator,
**characterized in that** the radical polymerization initiator is a hydroxylamine ester containing a structural element of formula (I) or (I') 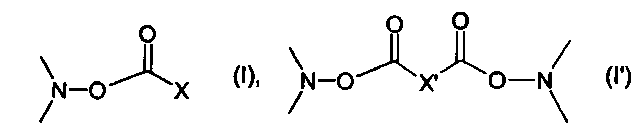 wherein
X is hydrogen, C₁-C₃₆alkyl, C₁-C₃₆alkyl which is substituted by halogen, C₅-C₁₂cycloalkyl, C₇-C₁₂bicyclo- or tricycloalkyl,C₂-C₃₆alkenyl, C₂-C₁₈alkynyl, C₆-C₁₀aryl, -O-C₁-C₁₈alkyl, -O-C₆-C₁₀aryl, -NH-C₁-C₁₈alkyl, -NH-C₆-C₁₀aryl, -N(C₁-C₆alkyl)₂;
X' is a direct bond or C₁-C₃₆alkylene, C₂-C₃₆alkenylene, C₂-C₃₈alkynylene, -(C₁-C₆alkylene)-phenyl-(C₁-C₆alkylene) or a group 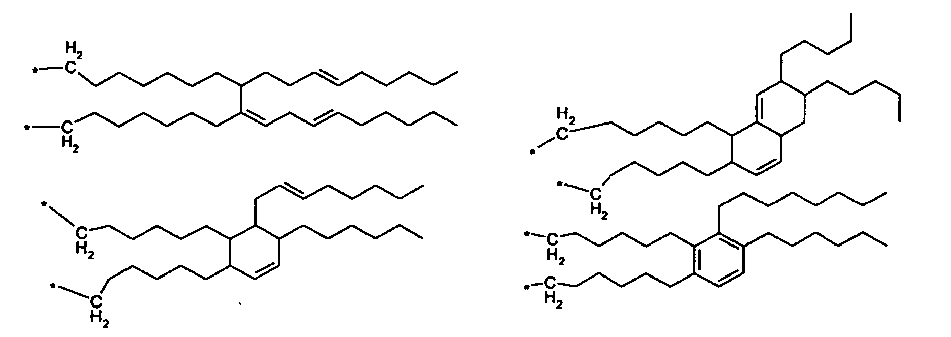 and
* indicates the bond to which the carbonyl groups are attached.

2. A method according to claim 1 wherein the operating pressure is of from 1000 to 3000 bar.

3. A method according to claim 1 wherein the polymerization temperature is of from 140° to 300° C.

4. A method according to claim 1 wherein the polydispersity, PD, of the resulting polyethylene is between 1,2 and 4,5, as measured by gel permeation chromatography.

5. A method according to claim 1 wherein the hydroxylamine ester is used in an amount of from 5 to 500 parts per million based on the weight of the total reaction mixture.

6. A method according to claim 1, wherein, as the hydroxylamine ester, there is used a compound of formula (la) or (I'a) 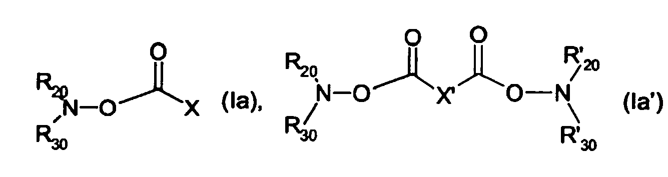 wherein
X is hydrogen, C₁-C₃₆alkyl, C₁-C₃₆alkyl which is substituted by halogen, C₅-C₁₂cycloalkyl, C₇-C₁₂bicydo- or tricycloalkyl, C₂-C₃₆alkenyl, C₂-C₁₈alkynyl, C₆-C₁₀aryl, -O-C₁-C₁₈alkyl, -O-C₆-C₁₀aryl, -NH-C₁-C₁₈alkyl, -NH-C₆-C₁₀aryl, -N(C₁-C₆alkyl)₂;
X' is a direct bond or C₁-C₃₆alkylene, C₂-C₃₆alkenylene, C₂-C₃₆alkynylene, phenylene, -(C₁-C₆alkylene)-phenyl-(C₁-C₆alkylene) or a group 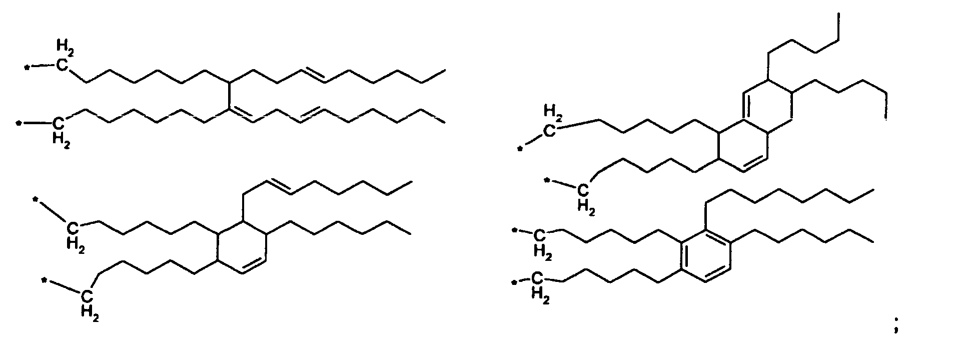 R₂₀, R'₂₀, R₃₀ and R'₃₀ are each independently of the others unsubstituted, halo-, CN-, NO₂₋ or -COOR₄₀-substituted or O- or NR₄₀-interrupted C₁-C₁₈alkyl, C₂-C₁₈alkenyl, C₂-C₁₈alkynyl; R₄₀ is hydrogen, phenyl or C₁-C₁₈alkyl; or
R₂₀ and R₃₀ and/or R'₂₀ and R'₃₀, together with the nitrogen atom to which they are bonded, form a 5- or 6-membered ring which may be interrupted by a nitrogen or oxygen atom and which may be substituted one or more times by C₁-C₆alkyl groups and carboxyl groups.

7. A method according to claim 6, wherein there are used compounds of formula (Ia) wherein R₂₀ and R₃₀, together with the nitrogen atom to which they are bonded, form a piperidine ring which is substituted in the 2,2- and 6,6-positions by C₁-C₄alkyl groups and in the 4-position has an ether, amine, amide, urethane, ester or ketal group.

8. A method according to claim 6, wherein, as the hydroxylamine ester, there is used a compound of formula (A), (B), (C) or (O) 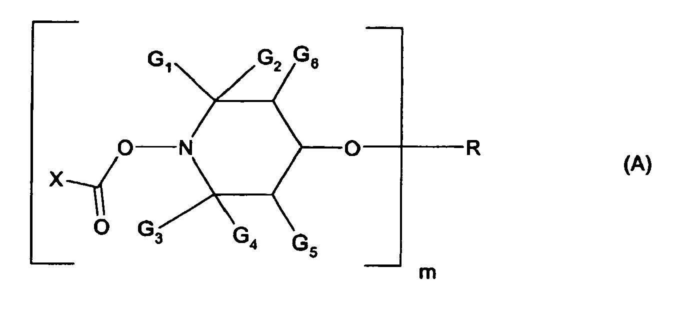 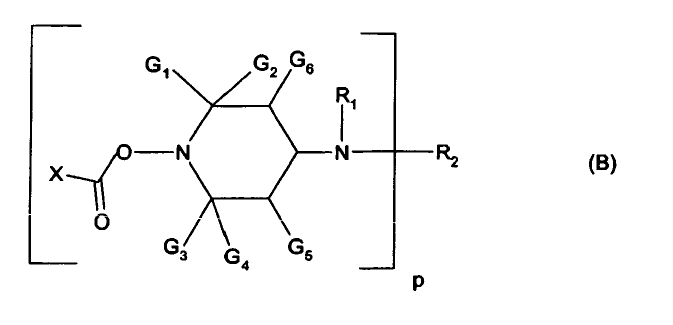 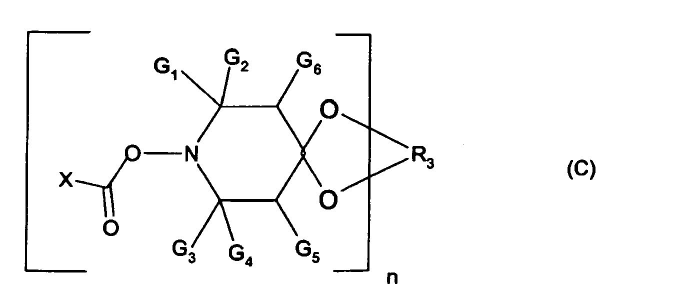 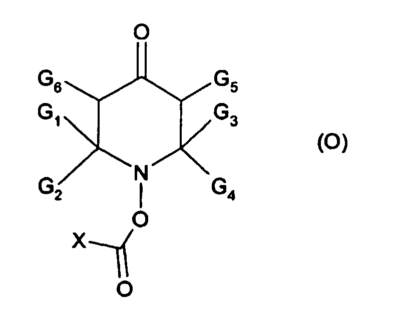 wherein
G₁, G₂, G₃ and G₄ are each independently of the others alkyl having from 1 to 4 carbon atoms;
G₅ and G₆ are each independently of the other hydrogen or C₁-C₄alkyl;
m is a number 1-2;
R, when m is 1, is hydrogen, uninterrupted C₁-C₁₈alkyl or C₂-C₁₈alkyl interrupted by one or more oxygen atoms, or is cyanoethyl, benzoyl, glycidyl, a monovalent radical of an aliphatic carboxylic acid having from 2 to 18 carbon atoms, of a cycloaliphatic carboxylic acid having from 7 to 15 carbon atoms or of an α,β-unsaturated carboxylic acid having from 3 to 5 carbon atoms or of an aromatic carboxylic acid containing from 7 to 15 carbon atoms, it being possible for each carboxylic acid to be substituted in the aliphatic, cycloaliphatic or aromatic unit by from 1 to 3 groups -COOZ₁₂ wherein Z₁₂ is hydrogen, C₁-C₂₀alkyl, C₃-C₁₂alkenyl, C₅-C₇cycloalkyl, phenyl or benzyl; or R is a monovalent radical of a carbamic acid or phosphorus-containing acid or is a monovalent silyl radical;
R, when m is 2, is C₂-C₁₂alkylene, C₄-C₁₂alkenylene, xylylene, a bivalent radical of an aliphatic dicarboxylic acid having from 2 to 36 carbon atoms or of a cycloaliphatic or aromatic dicarboxylic acid having from 8 to 14 carbon atoms or of an aliphatic, cycloaliphatic or aromatic dicarbamic acid having from 8 to 14 carbon atoms, it being possible for each dicarboxylic acid to be substituted in the aliphatic, cycloaliphatic or aromatic unit by one or two groups -COOZ₁₂; or
R is a bivalent radical of a phosphorus-containing acid or a bivalent silyl radical;
p is 1,
R₁ is C₁-C₁₂alkyl, C₅-C₇cycloalkyl, C₇-C₈aralkyl, C₂-C₁₈alkanoyl, C₃-C₅alkenoyl or benzoyl;
R₂ is C₁-C₁₈alkyl, C₅-C₇cycloalkyl, C₂-C₈alkenyl, each unsubstituted or substituted by a cyano, carbonyl or carbamide group, or is glycidyl, a group of formula -CH₂CH(OH)-Z or of formula -CO-Z or -CONH-Z, wherein Z is hydrogen, methyl or phenyl;
n is a number 1 or 2;
when n is 1,
R₃ is C₂-C₈alkylene or hydroxyalkylene or C₄-C₃₆acyloxyalkylene; or,
when n is 2,
R₃ is (-CH₂)₂C(CH₂-)₂ and
X is as defined in claim 6.

9. A method according to claim 6, wherein the substituent X is selected from the group consisting of C₁-C₃₈alkyl, C₂-C₁₉alkenyl and C₆-C₁₀aryl.

10. A method according to claim 1 wherein the hydroxylamine ester is of formula (C') 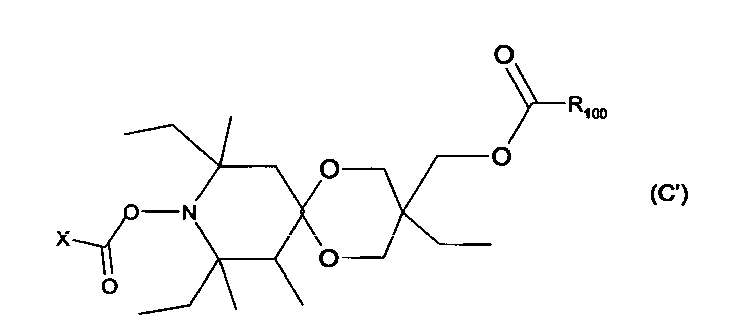 wherein X is hydrogen or C₁-C₁₈alkyl and R₁₀₀ is C₄-C₂₄alkyl

11. A method according to claim 1, wherein the hydroxylamine ester is an oligomer or polymer obtained by reacting a dicarboxylic acid with a compound of formula A1 or B1 or by reacting a diisocyanate with a compound of formula A1 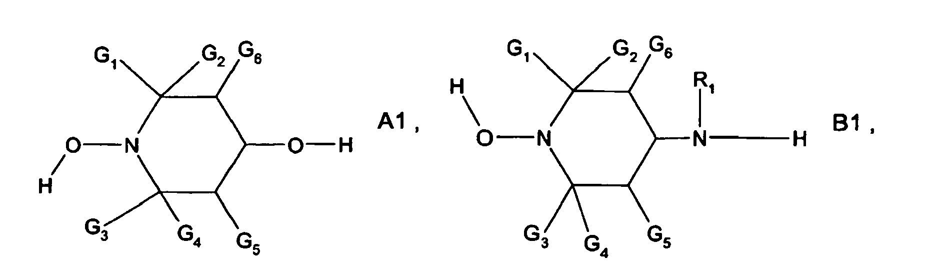 wherein G₁, G₂, G₃ and G₄ are each independently of the others C₁-C₄alkyl, or G₁ and G₂ together and G₃ and G₄ together, or G₁ and G₂ together or G₃ and G₄ together are pentamethylene;
G₅ and G₆ are each independently of the other hydrogen or C₁-C₄alkyl; and
R₁ is C₁-C₁₂alkyl, C₅-C₇cycloalkyl, C₇-C₈aralkyl, C₂-C₁₈alkanoyl, C₃-C₅alkenoyl or benzoyl.

12. A method according to claim 1 wherein an additional organic radical initiator is added.

13. A method according to claim 12 wherein the organic peroxide is selected from the group consisting of isobutyryl-peroxide, isopropylperoxy-dicarbonate, di-n-butylperoxy-dicarbonate, di-sec-butylperoxy-dicarbonate, dicyclohexylperoxy-dicarbonate, di(2-ethylhexyl)peroxy-dicarbonate, t-butyl-perneodecanoate, t-butyl-perpivalate, bis(3,5,5-trimethyl-hexanoyl)peroxide, didecanoyl-peroxide, dilauroyl-peroxide, t-butyl-perisobutyrate, t-butyl-per2-ethylhexanoate, t-butyl-peracetate, t-butyl-per-3,5,5-trimethylhexanoate, t-butyl-perbenzoate, di-t-butyl-peroxide, t-butyl-hydroperoxide and di-t-amylperoxide.

14. A method according to claim 1 wherein additionally a chain transfer agent is added.

15. A method according to claim 14 wherein the chain transfer agent is selected from the group consisting of ketones, aldehydes, C₃-C₂₀alkanes, C₃-C₂₀alkenes, mercaptanes and disulfides.

16. A method according to claim 1 wherein a comonomer is present which is selected from a monomer containing a vinyl group, an allyl group, a vinylidene group, a diene group or a olefinic group other than ethylene.

17. A method according to claim 16 wherein a comonomer is present which is selected from the group consisting of methylacrylate, ethylacrylate,n-butylacrylate, vinylacetate, styrene, a-methylstyrene and methylmethacrylate.

18. Use of a hydroxylamine ester containing a structural element of formula (1) or (I') according to claim 1 as radical forming species for the continuous or batch wise polymerization or copolymerization of ethylene at an operating pressure of from 500 to 3500 bar, at a polymerization temperature between 100° and 400° C in a suitable high pressure reactor.

## Patentansprüche

1. Verfahren zur Polymerisation oder Copolymerisation von Ethylen bei einem Betriebsdruck von 500 bis 3500 Bar, bei einer Polymerisationstemperatur zwischen 100° und 400°C in einem geeigneten Hochdruckreaktor, unter kontinuierlichem oder chargenweisem Betrieb durch die Verwendung eines radikalischen Polymerisationsstarters, **dadurch gekennzeichnet, dass** der radikalische Polymerisationsstarter ein Hydroxylaminester ist, der ein Strukturelement der Formel (I) oder (I') enthält, 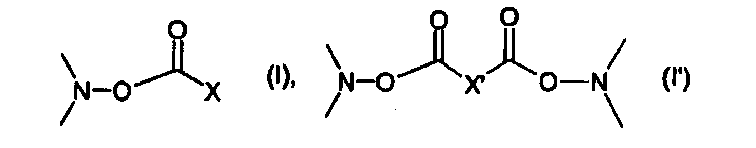 worin
X Wasserstoff, C₁-C₃₆-Alkyl, C₁-C₃₆-Alkyl, das substituiert ist mit Halogen, C₅-C₁₂-Cycloalkyl, C₇-C₁₂-Bicyclo- oder -Tricycloalkyl, C₂-C₃₆-Alkenyl, C₂-C₁₈-Alkinyl-, C₆-C₁₀-Aryl, -O-C₁-C₁₈ Alkyl , -O-C₆-C₁₀-Aryl, -NH-C₁-C₁₈-Alkyl, -NH-C₆-C₁₀-Aryl, -N(C₁-C₆-Alkyl)₂ darstellt;
X' eine direkte Bindung oder C₁-C₃₆-Alkylen, C₂-C₃₆-Alkenylen, C₂-C₃₆-Alkinylen, -(C₁-C₆-Alkylen)-phenyl-(C₁-C₆-alkylen) oder eine Gruppe 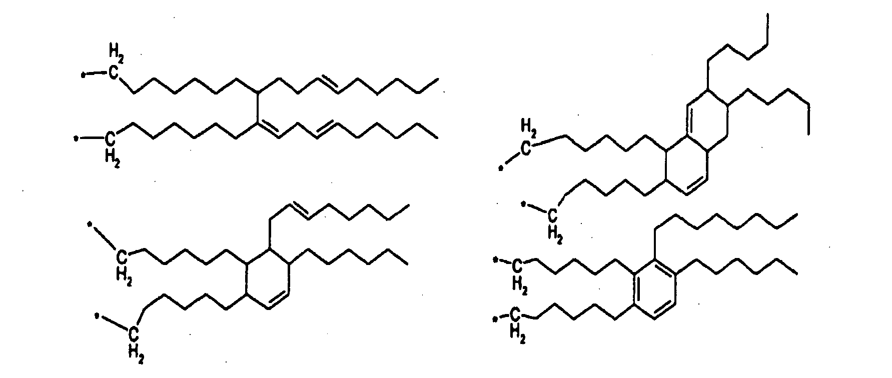 darstellt, und
* die Bindung, an die die Carbonylgruppen gebunden sind, anzeigt.

2. Verfahren nach Anspruch 1, wobei der Betriebsdruck 1 000 bis 3 000 Bar ist.

3. Verfahren nach Anspruch 1, wobei die Polymerisationstemperatur 140° bis 300°C ist.

4. Verfahren nach Anspruch 1, wobei die Polydispersität PD des erhaltenen Polyethylens zwischen 1,2 und 4,5 liegt, wie durch Gel-Permeations-Chromatographie gemessen.

5. Verfahren nach Anspruch 1, wobei der Hydroxylaminester in einer Menge von 5 bis 500 Teilen pro Million, bezogen auf das Gewicht des gesamten Reaktionsgemisches, verwendet wird.

6. Verfahren nach Anspruch 1, wobei als der Hydroxylaminester eine Verbindung der Formel (Ia) oder (I'a) 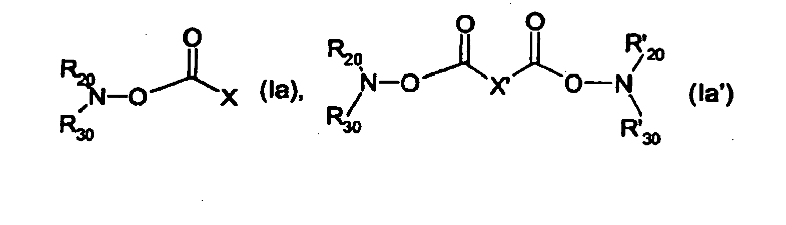 verwendet wird, wobei
X Wasserstoff, C₁-C₃₆-Alkyl, C₁-C₃₆-Alkyl, das substituiert ist mit Halogen, C₅-C₁₂-Cycloalkyl, C₇-C₁₂-Bicyclo- oder -Tricycloalkyl, C₂-C₃₆-Alkenyl, C₂-C₁₈-Alkinyl, C₆-C₁₀-Aryl, -O-C₁-C₁₈-Alkyl, -O-C₆-C₁₀-Aryl, -NH-C₁-C₁₈-Alkyl , -NH-C₆-C₁₀-Aryl , -N(C₁-C₆-Alkyl)₂ darstellt;
X' eine direkte Bindung oder C₁-C₃₆-Alkylen, C₂-C₃₆-Alkenylen, C₂-C₃₆-Alkinylen, Phenylen, -(C₁-C₆-Alkylen)-phenyl-(C₁-C₆-alkylen) oder eine Gruppe darstellt 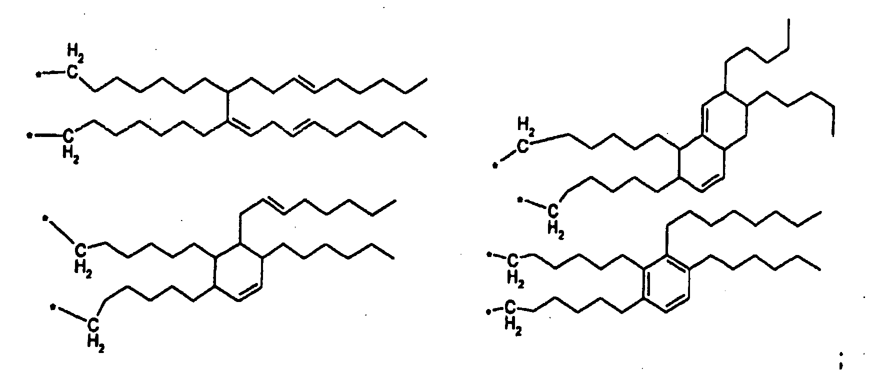 R₂₀, R'₂₀, R₃₀ und R'₃₀, jeweils unabhängig von den anderen, unsubstituiertes, Halogen-, CN-, NO₂- oder -COOR₄₀-substituiertes oder O- oder NR₄₀-unterbrochenes C₁-C₁₈-Alkyl, C₂-C₁₈-Alkenyl, C₂-C₁₈-Alkinyl darstellen;
R₄₀ Wasserstoff, Phenyl oder C₁-C₁₈-Alkyl darstellt; oder R₂₀ und R₃₀ und/oder R'₂₀ und R'₃₀, zusammen mit dem Stickstoffatom, an das sie gebunden sind, einen 5- oder 6-gliedrigen Ring bilden, der durch ein Stickstoff- oder Sauerstoffatom unterbrochen sein kann, und der ein- oder mehrere Male mit C₁-C₆-Alkylgruppen und Carboxylgruppen substituiert sein kann.

7. Verfahren nach Anspruch 6, wobei Verbindungen der Formel (Ia) eingesetzt werden, worin R₂₀ und R₃₀, zusammen mit dem Stickstoffatom, an das sie gebunden sind, einen Piperidinring bilden, der in den 2,2- und 6,6-Positionen mit C₁-C₄-Alkylgruppen substituiert ist und in der 4-Position eine Ether-, Amin-, Amid-, Urethan-, Ester- oder Ketalgruppe aufweist.

8. Verfahren nach Anspruch 6, wobei als der Hydroxylaminester eine Verbindung der Formel (A), (B), (C) oder (O) eingesetzt wird, 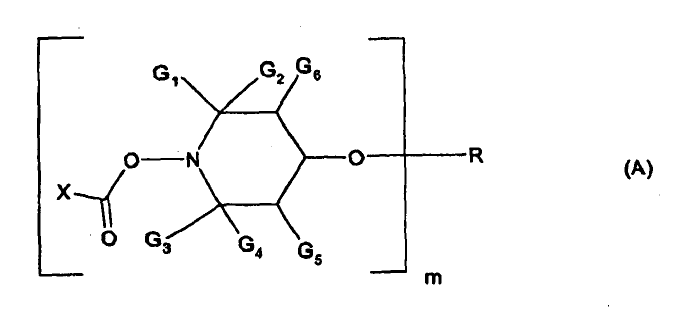 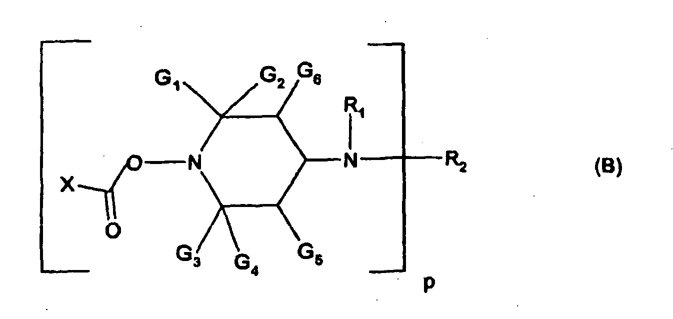 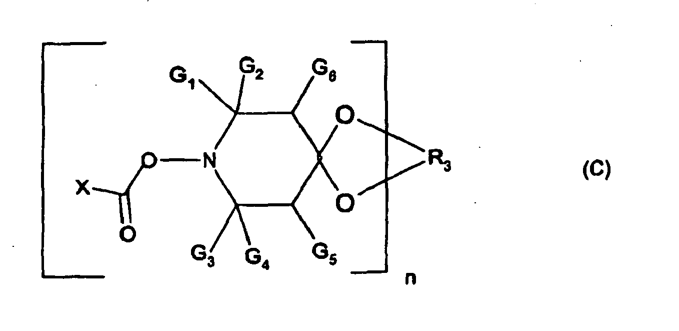 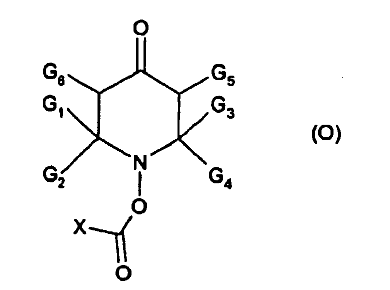 worin
G₁, G₂, G₃ und G₄, jeweils unabhängig von den anderen, Alkyl mit 1 bis 4 Kohlenstoffatomen darstellen;
G₅ und G₆, jeweils unabhängig von dem anderen, Wasserstoff oder C₁-C₄-Alkyl darstellen;
m eine Zahl 1-2 ist;
R, wenn m 1 ist, Wasserstoff, nicht unterbrochenes C₁-C₁₈-Alkyl oder C₂-C₁₈-Alkyl, unterbrochen durch eines oder mehrere Sauerstoffatome, darstellt, oder Cyanoethyl, Benzoyl, Glycidyl, einen einwertigen Rest einer aliphatischen Carbonsäure mit 2 bis 18 Kohlenstoffatomen, von einer cycloaliphatischen Carbonsäure mit 7 bis 15 Kohlenstoffatomen, oder von einer α,β-ungesättigten Carbonsäure mit 3 bis 5 Kohlenstoffatomen, oder von einer aromatischen Carbonsäure, die 7 bis 15 Kohlenstoffatome enthält, darstellt, wobei es möglich ist, dass jede Carbonsäure in der aliphatischen, cycloaliphatischen oder aromatischen Einheit mit 1 bis 3 Gruppen -COOZ₁₂ substituiert ist, worin Z₁₂ Wasserstoff, C₁-C₂₀-Alkyl, C₃-C₁₂-Alkenyl, C₅-C₇-Cycloalkyl, Phenyl oder Benzyl darstellt; oder R einen einwertigen Rest einer Carbamidsäure oder Phosphor-enthaltenden Säure darstellt oder einen einwertigen Silylrest darstellt;
R, wenn m 2 ist, C₂-C₁₂-Alkylen, C₄-C₁₂-Alkenylen, Xylylen, einen zweiwertigen Rest einer aliphatischen Dicarbonsäure mit 2 bis 36 Kohlenstoffatomen oder von einer cycloaliphatischen oder aromatischen Dicarbonsäure mit 8 bis 14 Kohlenstoffatomen oder von einer aliphatischen, cycloaliphatischen oder aromatischen Dicarbamidsäure mit 8 bis 14 Kohlenstoffatomen darstellt, wobei es möglich ist, dass jede Dicarbonsäure in der aliphatischen, cycloaliphatischen oder aromatischen Einheit mit einer oder zwei Gruppen -COOZ₁₂ substituiert ist; oder
R einen zweiwertigen Rest einer Phosphor-enthaltenden Säure oder einen zweiwertigen Silylrest darstellt;
p 1 ist,
R₁ C₁-C₁₂-Alkyl, C₅-C₇-Cycloalkyl, C₇-C₈-Aralkyl, C₂-C₁₈-Alkanoyl, C₃-C₅-Alkenoyl oder Benzoyl darstellt;
R₂ C₁-C₁₈-Alkyl, C₅-C₇-Cycloalkyl, C₂-C₈-Alkenyl, jeweils unsubstituiert oder substituiert mit einer Cyano-, Carbonyl- oder Carbamidgruppe, darstellt, oder Glycidyl, eine Gruppe der Formel -CH₂CH(OH)-Z oder der Formel -CO-Z oder -CONH-Z, worin Z Wasserstoff, Methyl oder Phenyl darstellt, darstellt;
n eine Zahl von 1 oder 2 ist;
wenn n 1 ist,
R₃ C₂-C₈-Alkylen oder Hydroxyalkylen oder C₄-C₃₆-Acyloxyalkylen darstellt; oder,
wenn n 2 ist,
R₃ (-CH₂)₂C(CH₂-)₂ darstellt und
X wie in Anspruch 6 definiert ist.

9. Verfahren nach Anspruch 6, wobei der Substituent X aus der Gruppe, bestehend aus C₁-C₃₆-Alkyl, C₂-C₁₉-Alkenyl und C₆-C₁₀-Aryl, ausgewählt ist.

10. Verfahren nach Anspruch 1, wobei der Hydroxylaminester die Formel (C') 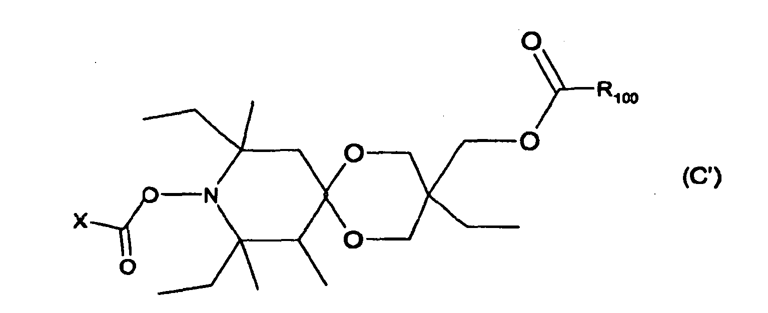 aufweist,
worin X Wasserstoff oder C₁-C₁₈-Alkyl darstellt und R₁₀₀ C₄-C₂₄-Alkyl darstellt.

11. Verfahren nach Anspruch 1, wobei der Hydroxylaminester ein Oligomer oder Polymer ist, erhalten durch Umsetzen einer Dicarbonsäure mit einer Verbindung der Formel A1 oder B1 oder durch Umsetzen eines Diisocyanats mit einer Verbindung der Formel A1 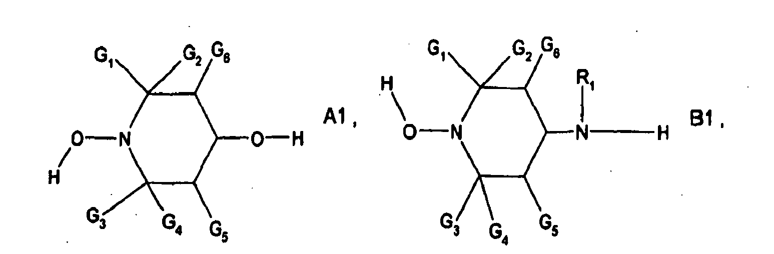 worin G₁, G₂, G₃ und G₄, jeweils unabhängig von den anderen, C₁-C₄-Alkyl darstellen, oder G₁ und G₂ zusammen und G₃ und G₄ zusammen, oder G₁ und G₂ zusammen oder G₃ und G₄ zusammen Pentamethylen darstellen;
G₅ und G₆, jeweils unabhängig von dem anderen, Wasserstoff oder C₁-C₄-Alkyl darstellen; und
R₁ C₁-C₁₂-Alkyl, C₅-C₇-Cycloalkyl, C₇-C₈-Aralkyl, C₂-C₁₈-Alkanoyl, C₃-C₅-Alkenoyl oder Benzoyl darstellt.

12. Verfahren nach Anspruch 1, wobei ein zusätzlicher organischer radikalischer Starter zugesetzt wird.

13. Verfahren nach Anspruch 12, wobei das organische Peroxid aus der Gruppe, bestehend aus Isobutyryl-peroxid, Isopropylperoxy-dicarbonat, Di-n-butylperoxy-dicarbonat, Di-sec-butylperoxy-dicarbonat, Dicyclohexylperoxy-dicarbonat, Di-(2-ethylhexyl)peroxy-dicarbonat, t-Butyl-perneodecanoat, t-Butyl-perpivalat, Bis(3,5,5-trimethyl-hexanoyl)peroxid, Didecanoyl-peroxid, Dilauroyl-peroxid, t-Butyl-perisobutyrat, t-Butyl-per-2-ethyl-hexanoat, t-Butyl-peracetat, t-Butyl-per-3,5,5-trimethylhexanoat, t-Butyl-perbenzoat, Di-t-butyl-peroxid, t-Butyl-hydroperoxid und Di-t-amylperoxid, ausgewählt ist.

14. Verfahren nach Anspruch 1, wobei zusätzlich ein Kettenübertragungsmittel zugesetzt wird.

15. Verfahren nach Anspruch 14, wobei das Kettenübertragungsmittel aus der Gruppe, bestehend aus Ketonen, Aldehyden, C₃-C₂₀-Alkanen, C₃-C₂₀-Alkenen, Mercaptanen und Disulfiden, ausgewählt ist.

16. Verfahren nach Anspruch 1, wobei ein Comonomer vorliegt, das aus einem Monomer, das eine Vinylgruppe, eine Allylgruppe, eine Vinylidengruppe, eine Diengruppe oder eine olefinische Gruppe, die von Ethylen verschieden ist, enthält, ausgewählt ist.

17. Verfahren nach Anspruch 16, wobei ein Comonomer vorliegt, das aus der Gruppe, bestehend aus Methylacrylat, Ethylacrylat, n-Butylacrylat, Vinylacetat, Styrol, α-Methylstyrol und Methylmethacrylat, ausgewählt ist.

18. Verwendung eines Hydroxylaminesters, enthaltend ein Strukturelement der Formel (I) oder (I') nach Anspruch 1, als Radikal bildende Spezies für die kontinuierliche oder chargenweise Polymerisation oder Copolymerisation von Ethylen bei einem Betriebsdruck von 500 bis 3500 Bar, bei einer Polymerisationstemperatur zwischen 100° und 400°C in einem geeigneten Hochdruckreaktor.

## Revendications

1. Procédé pour la polymérisation ou copolymérisation de l'éthylène sous une pression opératoire de 500 à 3500 bar, à une température de polymérisation comprise entre 100° et 400°C dans un réacteur à haute pression en continu ou en discontinu approprié par utilisation d'un amorceur de polymérisation radicalaire,
**caractérisé en ce que** l'amorceur de polymérisation radicalaire est un ester d'hydroxylamine contenant un élément de structure de formule (I) ou (I') 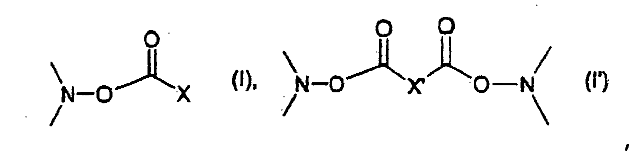 où
X représente un atome d'hydrogène, un groupe alkyle en C₁-C₃₆, alkyle en C₁-C₃₆ qui est substitué par un substituant halogène, cycloalkyle en C₅-C₁₂, bicyclo- ou tricycloalkyle en C₇-C₁₂, alcényle en C₂-C₃₆, alcynyle en C₂-C₁₈, aryle en C₆-C₁₀, -O-alkyle en C₁-C₁₈, -O-aryle en C₆-C₁₀, -NH-alkyle en C₁-C₁₈, -NH-aryle en C₆-C₁₀, -N(alkyle en C₁-C₆)₂ ;
X' est une liaison directe ou un groupe alkylène en C₁-C₃₆, alcénylène en C₂-C₃₆, alcynylène en C₂-C₃₆, - (alkylène en C₁-C₆)-phényl-(alkylène en C₁-C₆) ou un groupe 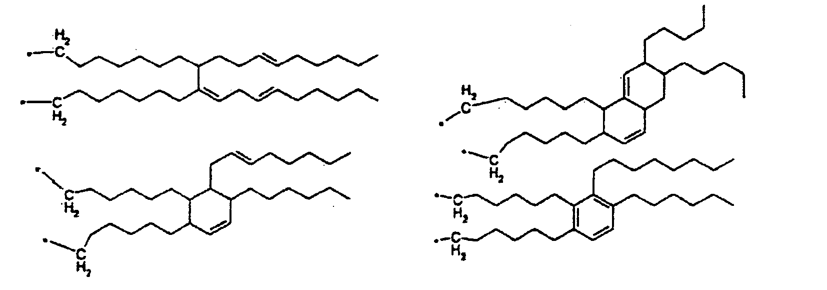 et
* indique la liaison à laquelle sont liés les groupes carbonyle.

2. Procédé selon la revendication 1, où la pression opératoire est de 1000 à 3000 bar.

3. Procédé selon la revendication 1, où la température de polymérisation est de 140°C à 300°C.

4. Procédé selon la revendication 1, où la polydispersité, PD, du polyéthylène résultant est comprise entre 1,2 et 4,5 comme mesurée par chromatographie de perméation de gel.

5. Procédé selon la revendication 1, où l'ester d'hydroxylamine est utilisé en une quantité de 5 à 500 parties par million sur la base du poids total du mélange réactionnel.

6. Procédé selon la revendication 1, où l'on utilise comme ester d'hydroxylamine un composé de formule (Ia) ou (I'a) 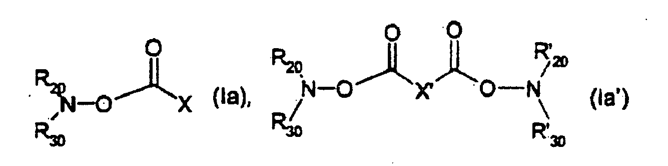 où X représente un atome d'hydrogène, un groupe alkyle en C₁-C₃₆, alkyle en C₁-C₃₆ qui est substitué par un substituant halogène, cycloalkyle en C₅-C₁₂, bicyclo- ou tricycloalkyle en C₇-C₁₂, alcényle en C₂-C₃₆, alcynyle en C₂-C₁₈, aryle en C₆-C₁₀, -O-alkyle en C₁-C₁₈, -O-aryle en C₆-C₁₀, -NH-alkyle en C₁-C₁₈, -NH-aryle en C₆-C₁₀, -N(alkyle en C₁-C₆)₂; X' est une liaison directe ou un groupe alkylène en C₁-C₃₆, alcénylène en C₂-C₃₆, alcynylène en C₂-C₃₆, phénylène,-(alkylène en C₁-C₆)-phényl-(alkylène en C₁-C₆) ou un groupe 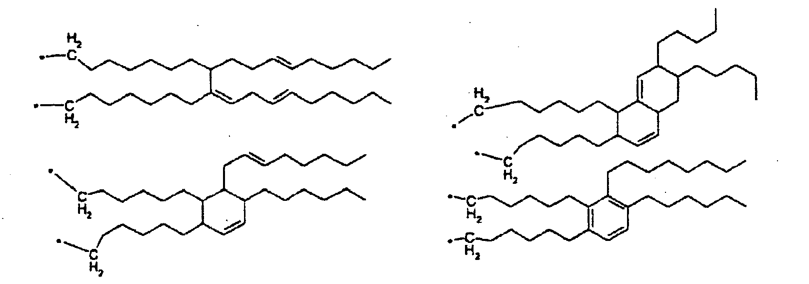 R₂₀, R'₂₀, R₃₀ et R'₃₀ sont chacun, indépendamment des autres, alkyle en C₁-C₁₈, alcényle en C₂-C₁₈, alcynyle en en C₂-C₁₈ non substitués ou substitués par un substituant halo, CN, NO₂ ou -COOR₄₀ ou interrompus par O ou NR₄₀ ;
R₄₀ représente un atome d'hydrogène, un groupe phényle ou alkyle en C₁-C₁₈ ; ou
R₂ₒ et R₃₀ et/ou R'₂₀ et R'₃₀, conjointement avec l'atome d'azote auquel ils sont liés, forment un cycle à 5 ou 6 chaînons qui peut être interrompu par un atome d'azote ou d'oxygène et qui peut être substitué une ou plusieurs fois par des groupes alkyle en C₁-C₆ et groupes carboxyle.

7. Procédé selon la revendication 6, où l'on utilise des composés de formule (Ia), où R₂₀ et R₃₀, conjointement avec l'atome d'azote auquel ils sont liés, forment un noyau pipéridine qui est substitué en positions 2,2 et 6,6 par des groupes alkyle en C₁-C₄ et qui, en position 4, porte un groupe éther, amine, amide, uréthane, ester ou cétal.

8. Procédé selon la revendication 6, où l'on utilise en tant qu'ester d'hydroxylamine un composé de formules (A), (B), (C) ou (O) 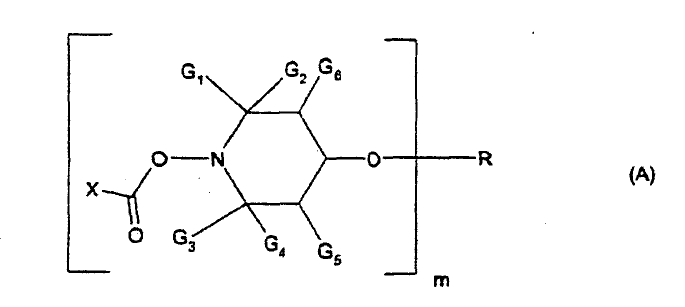 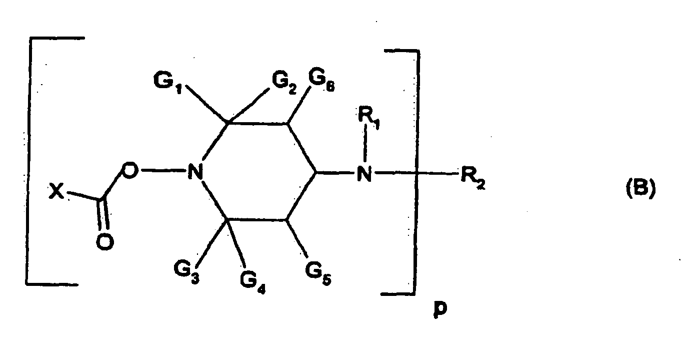 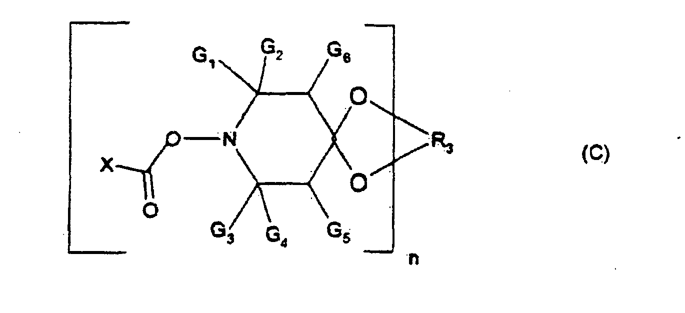 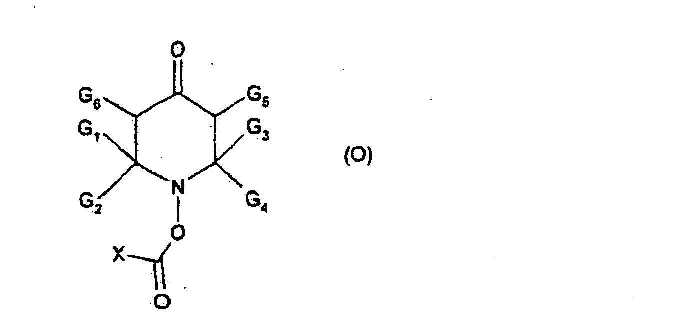 où
G₁, G₂, G₃ et G₄ représentent chacun, indépendamment des autres, un groupe alkyle ayant 1 à 4 atomes de carbone;
G₅ et G₆ représentent chacun, indépendamment des autres, un atome d'hydrogène ou un groupe alkyle en C₁-C₄;
m est un nombre 1-2;
R, quand m vaut 1, représente un atome d'hydrogène, un groupe alkyle en C₁-C₁₈ non interrompu ou alkyle en C₂-C₁₈ interrompu par un ou plusieurs atomes d'oxygène, ou représente un groupe cyanoéthyle, benzoyle, glycidyle, un radical monovalent d'un acide carboxylique aliphatique ayant de 2 à 18 atomes de carbone, d'un acide carboxylique cycloaliphatique ayant de 7 à 15 atomes de carbone ou d'un acide carboxylique α,β-insaturé ayant de 3 à 5 atomes de carbone ou d'un acide carboxylique aromatique contenant de 7 à 15 atomes de carbone, chaque acide carboxylique peut être substitué dans l'unité aliphatique, cycloaliphatique ou aromatique par 1 à 3 groupes -COOZ₁₂, où Z₁₂ représente un atome d'hydrogène, un groupe alkyle en C₁-C₂₀, alcényle en C₃-C₁₂, cycloalkyle en C₅-C₇, phényle ou benzyle ; ou R est un radical monovalent d'un acide carbamique ou d'un acide contenant du phosphore ou est un radical silyle monovalent;
R, quand m vaut 2, représente un groupe alkylène en C₂-C₁₂, alcénylène en C₄-C₁₂, xylylène, un radical bivalent d'un acide dicarboxylique aliphatique ayant de 2 à 36 atomes de carbone ou d'un acide dicarboxylique cycloaliphatique ou aromatique ayant 8 à 14 atomes de carbone ou d'un acide dicarbamique aliphatique, cycloaliphatique ou aromatique ayant de 8 à 14 atomes de carbone, chaque acide dicarboxylique peut être substitué dans l'unité aliphatique, cycloaliphatique ou aromatique par un ou deux groupes -COOZ₁₂; ou
R représente un radical bivalent d'un acide contenant du phosphore ou un radical silyle bivalent;
p vaut 1,
R₁ représente un groupe alkyle en C₁-C₁₂, cycloalkyle en C₅-C₇, aralkyle en C₇-C₈, alcanoyle en C₂-C₁₈, alcénoyle en C₃-C₅ ou benzoyle ;
R₂ représente un groupe alkyle en C₁-C₁₈, cycloalkyle en C₅-C₇, alcényle en C₂-C₈, chacun non substitué ou substitué par un groupe cyano, carbonyle ou carbamide, ou représente un glycidyle, un groupe de formule -CH₂CH(OH)-Z ou de formule -CO-Z ou -CONH-Z, où Z représente un atome d'hydrogène, un groupe méthyle ou phényle ;
n vaut 1 ou 2 ;
quand n vaut 1,
R₃ représente un groupe hydroxyalkylène ou alkylène en C₂-C₈ ou acyloxyalkylène en C₄-C₃₆ ; ou
quand n vaut 2,
R₃ représente un groupe (-CH₂)₂C(CH₂-)₂ et
X est défini comme dans la revendication 6.

9. Procédé selon la revendication 6, où le substituant X est choisi dans le groupe constitué par alkyle en C₁-C₃₆, alcényle en C₂-C₁₉ et aryle en C₆-C₁₀.

10. Procédé selon la revendication 1, dans lequel l'ester d'hydroxylamine répond à la formule (C') 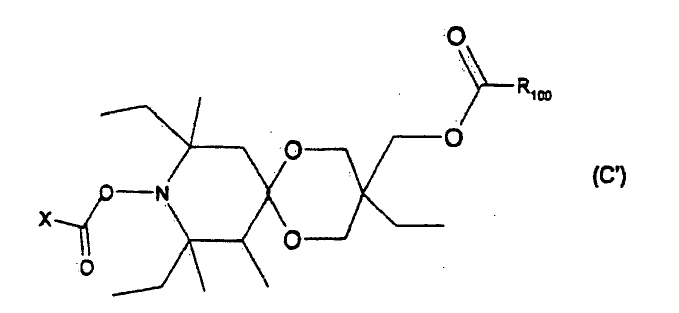 où X représente un atome d'hydrogène ou un groupe alkyle en C₁-C₁₈ et R₁₀₀ représente un groupe alkyle en C₄-C₂₄.

11. Procédé selon la revendication 1, où l'ester d'hydroxylamine est un oligomère ou polymère obtenu par réaction d'un acide dicarboxylique sur un composé de formule A1 ou B1 ou par réaction d'un diisocyanate sur un composé de formule A1 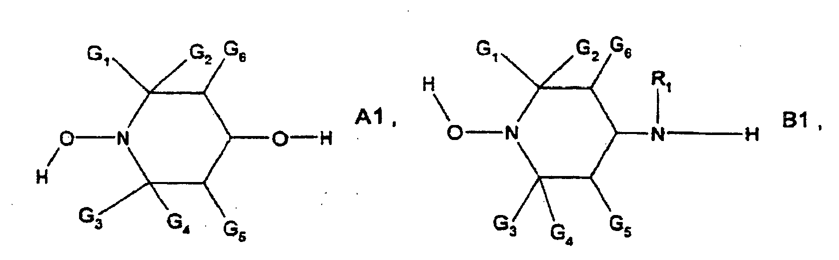 où G₁, G₂, G₃ et G₄ représentent chacun, indépendamment des autres, un groupe alkyle en C₁-C₄, ou G₁ et G₂ conjointement et G₃ et G₄ conjointement, ou G₁ et G₂ conjointement ou G₃ et G₄ conjointement représentent un groupe pentaméthylène;
G₅ et G₆ représentent chacun indépendamment l'un de l'autre un atome d'hydrogène ou un groupe alkyle en C₁-C₄; et
R₁ représente un groupe alkyle en C₁-C₁₂, cycloalkyle en C₅-C₇, aralkyle en C₇-C₈, alcanoyle en C₂-C₁₈, alcénoyle en C₃-C₅ ou benzoyle.

12. Procédé selon la revendication 1, où l'on ajoute un amorceur radicalaire organique supplémentaire.

13. Procédé selon la revendication 12, où le peroxyde organique est choisi dans le groupe constitué par le peroxyde d'isobutyryle, le peroxydicarbonate d'isopropyle, le peroxydicarbonate de di-n-butyle, le peroxydicarbonate de di-sec-butyle, le peroxydicarbonate de dicyclohexyle, le peroxy-dicarbonate de di(2-éthylhexyle), le pernéodécanoate de t-butyle, le perpivalate de t-butyle, le peroxyde de bis(3,5,5-triméthyl-hexanoyle), le peroxyde de didécanoyle, le peroxyde de dilauroyle, le perisobutyrate de t-butyle, le per-2-éthylhexanoate de t-butyle, le peracétate de t-butyle, le per-3,5,5-triméthylhexanoate de t-butyle, le perbenzoate de t-butyle, le peroxyde de di-t-butyle, l'hydroperoxyde de t-butyle et le peroxyde di-t-amyle.

14. Procédé selon la revendication 1, où l'on ajoute un agent de transfert de chaîne supplémentaire.

15. Procédé selon la revendication 14, où l'agent de transfert de chaîne est choisi dans le groupe constitué par des cétones, aldéhydes, alcanes en C₃-C₂₀, alcènes en C₃-C₂₀, mercaptanes et disulfures.

16. Procédé selon la revendication 1, où est présent un comonomère qui est choisi parmi un monomère contenant un groupe vinyle, un groupe allyle, un groupe vinylidène, un groupe diène ou un groupe oléfinique autre qu'éthylène.

17. Procédé selon la revendication 16, où est présent un comonomère qui est choisi dans le groupe constitué par l'acrylate de méthyle, l'acrylate d'éthyle, l'acrylate de n-butyle, l'acétate de vinyle, le styrène, l'α-méthylstyrène et le méthacrylate de méthyle.

18. Utilisation d'un ester d'hydroxylamine contenant un élément de structure de formule (I) ou (I') selon la revendication 1, en tant que type formant des radicaux pour la polymérisation ou copolymérisation en continu ou discontinu de l'éthylène sous une pression opératoire de 500 à 3500 bar, à une température de polymérisation est comprise entre 100° et 400°C dans un réacteur à haute pression approprié.
